Europäisches Patentamt

European Patent Office

Office européen des brevets

(19)

(11)  **EP 1 622 137 A1**

(12)  **EUROPEAN PATENT APPLICATION**
published in accordance with Art. 158(3) EPC

(43) Date of publication:
**01.02.2006 Bulletin 2006/05**

(21) Application number: **04728964.0**

(22) Date of filing: **22.04.2004**

(51) Int Cl.:
*G11B 7/135* (1985.01)       *G02B 5/18* (1968.09)
*G02B 5/30* (1968.09)

(86) International application number:
**PCT/JP2004/005822**

(87) International publication number:
**WO 2004/097819 (11.11.2004 Gazette 2004/46)**

(84) Designated Contracting States:
**DE FR GB**

(30) Priority: **25.04.2003 JP 2003122451**

(71) Applicant: **MATSUSHITA ELECTRIC INDUSTRIAL CO., LTD.**
**Kadoma-shi, Osaka 571-8501 (JP)**

(72) Inventors:
• **ASADA, Jun-ichi**
  **Kobe-shi,**
  **Hyogo 658-0015 (JP)**

• **NISHIWAKI, Seiji**
  **Kobe-shi,**
  **Hyogo 658-0015 (JP)**

(74) Representative: **Grünecker, Kinkeldey,**
**Stockmair & Schwanhäusser**
**Anwaltssozietät**
**Maximilianstrasse 58**
**80538 München (DE)**

(54)  **OPTICAL DIFFRACTION DEVICE AND OPTICAL INFORMATION PROCESSING DEVICE**

(57)     The present invention is an optical diffraction element to be disposed in an optical path through which a plurality of light beams of different wavelengths travel. It has a periodic structure which, when a first light beam having a wavelength $\lambda_1$ among the plurality of light beams is in a linear polarization state polarized in a first direction X, allows the first light beam to be substantially completely transmitted therethrough, but when the first light beam is in a linear polarization state polarized in a second direction Y perpendicular to the first direction, causes the first light beam to be substantially completely diffracted. At least a portion of a second light beam having a wavelength $\lambda_2$ among the plurality of light beams, the wavelength $\lambda_2$ being different from the wavelength $\lambda_1$ of the first light beam, is diffracted regardless of the polarization state thereof.

FIG.1

EP 1 622 137 A1

**Description**

**TECHNICAL FIELD**

The present invention relates to an optical diffraction element whose diffraction behavior is varied depending on the wavelength and polarization state of light. Moreover, the present invention relates to an optical information processing device which is capable of performing data recording and/or reproduction for a plurality of types of optical disks of different base material thicknesses.

**BACKGROUND ART**

In recent years, apparatuses for recording information on a recording medium such as an optical disk, or reading information from a recording medium, are gaining prevalence. As the recording media, CDs and DVDs are used. Optical disks which are based on new standards have also been developed, e.g., the BD (Blu-Ray Disc). Such recording media of various kinds are fabricated according to respectively different standards, and therefore differ in specs such as the wavelength of light for recording/reproduction, recording density, recording capacity, and base material thickness. However, apparatuses are being developed and made available each of which make it possible to perform recording/reproduction of information for a variety of recording media with a single apparatus.

In order to handle the data recording/reproduction for recording media which are fabricated according to such varying standards with a single optical disk apparatus, it is necessary to use an optical pickup incorporating a plurality of light sources which emit light of different wavelengths. An "optical pickup" is a small device in which elements such as a light source(s), a photodetector(s), an objective lens(es), an actuator(s) for driving the objective lens(es) are integrated, and is an important component element of an optical disk apparatus such as a DVD player or recorder.

In order to support various optical disks, it is necessary to employ an optical pickup which incorporates a plurality of light sources, select a light source in accordance with the type of optical disk for which to perform recording/reproduction, and perform a data write or erase/reproduction operation by using light which is emitted from that light source.

In order to downsize the optical disk apparatus and reduce the production cost while realizing the basic functions of recording/reproduction, it is necessary to make the optical system in the optical pickup as compact as possible.

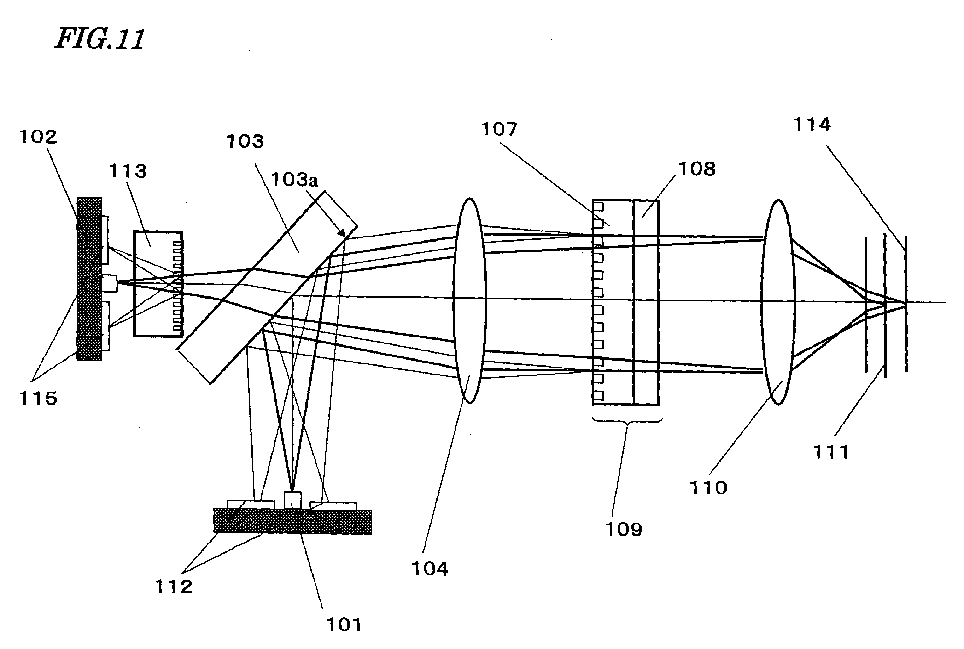

An example of an optical pickup having an optical system which supports a plurality of types of optical disks is described in Japanese Laid-Open Patent Publication No. 2001-14714. Hereinafter, a conventional example of an optical pickup will be described with reference to FIG. **11**. FIG. **11** is a diagram schematically showing only an essential portion of the optical pickup structure disclosed in Japanese Laid-Open Patent Publication No. 2001-14714 mentioned above.

The optical pickup shown in FIG. **11** can support a first type of optical disks, such as the read-only DVD-ROM and the recordable DVD-RAM, DVD-R, and DVD-RW, as well as a second type of optical disks, such as the read-only CD-ROM and the recordable CD-R and CD-RW. The first type of optical disks have a base material thickness of 0.6 mm, and the laser light which is used for performing information recording/reproduction on this type of optical disks has a wavelength in the vicinity of 650 nm (which will be referred to as a wavelength $\lambda_1$). On the other hand, the second type of optical disks have a base material thickness of 1.2 mm, and the laser light which is used for performing information recording/reproduction on this type of optical disks have a wavelength in the vicinity of 800 nm (which will be referred to as a wavelength $\lambda_2$).

Therefore, the aforementioned optical pickup comprises a laser light source **101** for generating laser light having a wavelength of about 650 nm ($\lambda_1$) and a laser light source **102** for generating laser light having a wavelength in the vicinity of 800 nm ($\lambda_2$).

The light (linearly polarized light) of the wavelength $\lambda_1$ which has been emitted from the laser light source **101** is reflected from a prism **103** on whose surface a film **103a** having wavelength selectivity is formed, and thereafter is collimated into parallel light by a collimating lens **104,** and transmitted through a polarization element **109**. The polarization element **109** is composed of a polarization hologram **107** and a wavelength plate (phase difference plate) **108**.

Since the hologram **107** has polarization dependence, the light which enters the hologram **107** is transmitted through the hologram **107** without being diffracted. In other words, the polarization direction (electric field vector) of the light entering the hologram **107** is prescribed so that the light will not be diffracted by the hologram **107**.

The wavelength plate **108,** which has a $(5/4)\lambda_1$ retardation for light of the wavelength $\lambda_1$, converts the linearly polarized light entering the polarization element **109** into circularly polarized light, and outputs the circularly polarized light. The circularly polarized light which has been emitted from the polarization element **109** is converged by an objective lens **110** onto a recording surface **111** of,an optical disk whose base material has a thickness of 0.6 mm (e.g., a DVD). The light which has been reflected from the recording surface **111** is propagated in a direction opposite to the light which has come from the light source side, goes through the objective lens **110,** and enters the polarization element **109**. Therefore, the light which has been reflected form the optical disk is converted by the wavelength plate **108** into linearly polarized light, which is polarized in a direction perpendicular to the polarization direction of the linearly polarized light coming from the light source side, and enters the polarization hologram **107.** Thus, before being transmitted through the polarization hologram **107,** the light which is reflected from the optical disk is converted by the wavelength plate **108** into linearly polarized light that will be diffracted by the polarization hologram **107,** and is therefore diffracted by the hologram **107.** This diffraction occurs in such a manner as to split the cross section of the bundle of rays of light reflected from the optical disk.

The aforementioned diffracted light goes through the collimating lens **104,** and is reflected by the prism **103.** The diffracted light which has been reflected from the prism **103** enters a group of photodetectors **112** which are disposed in the proximity of the laser light source **101.** Thus, changes in the amount of light which has been reflected from an optical disk such as a DVD are detected, whereby signals to be used for focusing and tracking controls, etc., as well as a reproduced signal (RF signal) and the like are obtained.

On the other hand, light of the wavelength $\lambda_2$ which has been emitted from the laser light source **102** is partially diffracted by a hologram **113,** which is a transparent element (e.g., resin) having a grating of undulations formed thereon, thus becoming diffracted light such as +1st order light and - 1st order light. However, most of the light is transmitted therethrough as 0th order light.

The 0th order light which has been emitted from the hologram **113** is transmitted through the prism **103** and the wavelength-selective thin film **103a,** and thereafter enters the collimating lens **104.** The collimating lens **104** converges the incident divergent light to a certain degree. Although the light of the wavelength $\lambda_2$ which has been transmitted through the collimating lens **104** enters the polarization element **109,** its polarization direction is prescribed to be a direction which will not receive diffraction by the polarization hologram **107;** therefore, the light will be transmitted intact through the polarization hologram **107,** without being diffracted by the polarization hologram **107,** as in the case of the light of the wavelength $\lambda_1$.

As mentioned earlier, the wavelength plate **108** functions as a 5/4 wavelength plate with respect to light of the wavelength $\lambda_1$, but causes a different phase difference in light of the wavelength $\lambda_2$. A 5/4 wavelength of light having the wavelength $\lambda_1$ of about 650 nm will have a phase difference with a wavelength of the magnitude as expressed by (eq. 1) below.

$$\texttt{(eq. 1)}$$

$$\texttt{650 nm} \times\texttt{5/4=812.5 nm} \fallingdotseq \texttt{800 nm}$$

Since the wavelength $\lambda_2$ of the laser light which is used for CDs and the like is about 800 nm, the wavelength plate **108** functions substantially as a 1 wavelength plate with respect to light of the wavelength $\lambda_2$. Therefore, any light of the wavelength $\lambda_2$ transmitted through the wavelength plate **108** passes through the wavelength plate **108** while almost being linearly polarized light.

The light (wavelength $\lambda_2$) which has been transmitted through the polarization element **109** is converged by the objective lens **110** onto the recording surface **114** of an optical disk (e.g., a CD) whose base material has a thickness of 1.2 mm. The light which has been reflect by the recording surface **114** goes through the objective lens **110,** and again enters the polarization element **109.** The wavelength plate **108** functions as a 1 wavelength plate, as described above. Therefore, in the return path, too, light of the wavelength $\lambda_2$ is transmitted through the wavelength plate **108** while being linearly polarized light, and enters the polarization hologram **107.** Hence, the polarization direction of the light (wavelength $\lambda_2$) entering the polarization hologram **107** is the same as the polarization direction in the forward path, so that the light of the wavelength $\lambda_2$ is transmitted intact through the hologram **107,** without receiving the diffraction action of the hologram **107,** and enters the collimating lens **104.**

The light entering the collimating lens **104** goes through the prism **103,** and is partially diffracted by the hologram **113,** which has no polarization dependence. The light which has been diffracted by the hologram **113** enters, in a split form, a group of photodetectors **115** which are disposed in the proximity of the laser light source **102.** Thus, changes in the amount of light which has been reflected from an optical disk such as a CD are detected, whereby control signals, e.g., focusing and tracking, as well as an RF signal and the like are obtained.

Next, the structure and operation principles of the polarization hologram **107** employed in the above-described polarization element **109** will be described in more detail.

The polarization hologram is fabricated by using, for example, a substrate of birefringent material (refractive indices: $n_1$, $n_2$, with a refractive index difference $\Delta n$) having refractive index anisotropy, e.g., lithium niobate. On the surface of such a substrate, grating grooves having a depth d are formed. The grating grooves are filled with an isotropic material (refractive index: $n_1$) not having refractive index anisotropy.

The substrate composed of a material having refractive index anisotropy has the refractive index $n_1$ with respect to polarized light whose polarization direction is parallel to the grating grooves, and has the refractive index $n_2$ ($n_1 \neq n_2$)

with respect to any polarized light which is perpendicular to the grating grooves, for example. In other words, the refractive index with respect to polarized light whose polarization direction is parallel to the grating grooves is the same inside or outside of the grating grooves, and is $n_1$. On the other hand, the refractive index with respect to polarized light whose polarization direction is perpendicular to the grating grooves is $n_1$ inside the grating grooves, and $n_2$ outside the grating grooves. Therefore, the hologram functions as a diffraction grating with respect to polarized light whose polarization direction is perpendicular to the grating grooves, whereas the hologram does not function as a diffraction grating with respect to polarized light whose polarization direction is parallel to the grating grooves.

Now, assuming that a phase difference $\phi$ exists between the light passing inside the grating grooves and the light passing outside the grating grooves (inter-groove portions), a transmittance T for the light (wavelength $\lambda$) which is transmitted through the hologram is expressed as eq. 2 below.

$$(eq. \ 2)$$

$$T=\cos^2(\phi/2)$$

The phase difference $\phi$ is generally expressed by eq. 3 below.

$$(eq. \ 3)$$

$$\phi = 2\pi \Delta nd/\lambda$$

Herein, $\Delta n$ is a refractive index difference which exists between the inside of the grating grooves and the inter-groove portions. In the case of this example, $\Delta n = n_1 - n_2$ holds true with respect to polarized light whose polarization direction is perpendicular to the grating grooves, whereas $\Delta n = n_1 - n_1 = 0$ holds true with respect to polarized light whose polarization direction is parallel to the grating grooves.

Therefore, the transmittance T for polarized light which is parallel to the grating grooves is expressed by eq. 4 below, since $\phi = 0$ is obtained when $\Delta n = 0$ is substituted for eq. 3.

$$(eq. \ 4)$$

$$T=1$$

On the other hand, the phase difference $\phi$ for polarized light which is perpendicular to the grating grooves is expressed by eq. 5.

$$(eq. \ 5)$$

$$\phi = 2\pi(n_1-n_2)d/\lambda$$

In eq. 5, if the depth d of the grating grooves is set so that $\phi = \pi$, the transmittance T for polarized light which is perpendicular to the grating grooves is 0, so that such polarized light will be completely diffracted.

Therefore, the relationship between the polarization direction of light and the direction of the grating grooves of the hologram **107** is set so that the light of the wavelength $\lambda_1$ and the light of the wavelength $\lambda_2$ traveling from the light source toward the optical disk will be transmitted intact, without being susceptible to the diffraction grating of the polarization hologram **107**. In this case, any light entering the polarization element **109** will not be diffracted by the polarization hologram **107**, irrespective of its wavelength.

Conversely, when the light which is reflected from the optical disk enters the polarization hologram **107**, the polarization direction of the light of the wavelength $\lambda_1$ is perpendicular to the polarization direction of the light of the wavelength $\lambda_1$ in the forward path. In other words, the polarization direction of the light of the wavelength $\lambda_1$ in the return path is perpendicular to the grating grooves. Therefore, if the hologram **107** is produced by setting $\lambda$ in the above

equations to be equal to $\lambda_1$, this light will be completely diffracted by the hologram **107.** On the other hand, the light of the wavelength $\lambda_2$ in the return path is in the same polarization state as when in the forward path, so that the light of the wavelength $\lambda_2$ will be transmitted through the hologram **107** without being diffracted.

Thus, with a construction employing a hologram having polarization dependence and a phase plate having wavelength dependence, the forward and return optical paths of light for DVDs and the forward and return optical paths of light for CDs can be shared for the most part, as a result of which the total number of elements in the optical pickup can be reduced while also enabling downsizing and lowered cost.

In recent years, with a view to realizing a more compact and less expensive optical disk apparatus by downsizing its optical pickup and reducing its price by integrating the component elements thereof, there have been proposed: optical pickups including light sources (semiconductor laser chips) of different wavelengths which are provided proximate to one another on the same substrate; and optical pickups which employ an integrated device which integrates such light sources. In accordance with such optical pickups, an optical system can be substantially completely shared with respect to light of different wavelengths.

An example of an optical pickup which integrates such a plurality of light sources within a single chip is disclosed in Japanese Laid-Open Patent Publication No. 2000-76689. FIG. **12** is a diagram showing the structure of the optical pickup described in Japanese Laid-Open Patent Publication No. 2000-76689.

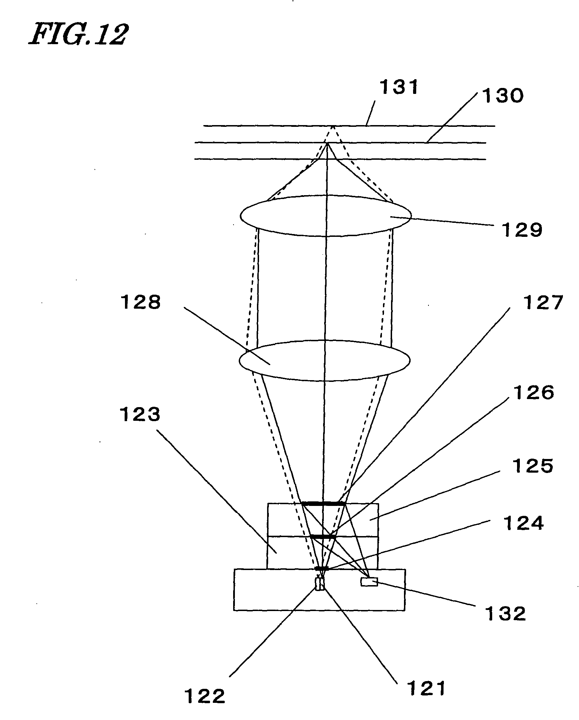

In the optical pickup of FIG. **12,** two semiconductor lasers **121** and **122** which are disposed proximate to each other emit light (wavelength $\lambda_1$) and light (wavelength $\lambda_2$) of different wavelengths. Herein, the wavelength $\lambda_1$ is e.g. about 650 nm, and the wavelength $\lambda_2$ is e.g. about 800 nm. In FIG. **12**, solid lines illustrate an optical path for the wavelength $\lambda_1$, whereas broken lines illustrate an optical path for the wavelength $\lambda_2$.

A portion of the light of the wavelength $\lambda_2$ which has been emitted from the semiconductor laser **122** is diffracted by a diffraction grating **124** which is formed in a portion of a transparent element **123** facing the light source, whereby three beams, i.e., $0^{th}$ order light and $\pm 1^{st}$ order light beams, are formed. The three beams are utilized for tracking detection.

The depth of the grating grooves of the diffraction grating **124** is set to a size for not diffracting the light beam of the wavelength $\lambda_1$ which has been emitted from the semiconductor laser **121.** A portion of the light of the wavelength $\lambda_1$ and the light beams of the wavelength $\lambda_2$ are diffracted, respectively, by a hologram **126** and a hologram **127** which are formed on the front and back sides of the transparent element **125,** but most light is transmitted intact. The transmitted light goes through a collimating lens **128** and an objective lens **129,** and is converged onto a recording surface **130** or **131** of optical disks having base material thicknesses which are suitable for the respective wavelengths. The light which has been reflected by the recording surface **130** or **131** returns to the holograms **127** and **126** by following a reverse path.

In the hologram **127,** the depth of the grating grooves is adjusted so as to diffract light of the wavelength $\lambda_1$ but not diffract light of the wavelength $\lambda_2$. On the other hand, in the hologram **126,** the depth of the grating grooves is adjusted so as to diffract any light beam of the wavelength $\lambda_2$, but not diffract any light beam of the wavelength $\lambda_1$.

In the above structure, for light beams of different wavelengths, a portion of each light beam is diffracted with a different hologram pattern, whereby light which is reflected from an optical disk can be led to a group of detectors **132.**

In accordance with the optical pickup shown in FIG. **12,** integration of the two light sources (semiconductor lasers **121** and **122)** allows for further downsizing, and also makes it possible to stabilize the interrelation between the optical axes of light of different wavelengths, with the implementation accuracy of the semiconductor chip. Therefore, the alignment of the optical system is facilitated, whereby the assembly and adjustment of the optical pickup is simplified, thus enhancing productivity.

However, optical disk apparatuses incorporating the aforementioned conventional optical pickups have the following problems.

In the case of a read-only optical disk apparatus, the signal does not need to show such a high S/N ratio value, and hence there is no practical problem even if the light source has a low output, or if there exists a certain degree of optical transmission loss associated with the optical system. However, in the case of an optical disk apparatus which performs a record or rewrite of information (data), a sufficiently large optical power is required to form phase-change marks on a recording layer of the optical disk. Especially in recent years, there is a need to increase the recording/transfer speed, and to record a large amount of data in a shorter span of time; therefore, an improved double-speed recording ability is required. If the double speed is enhanced, the amount of time for which the recording layer is irradiated with laser light is reduced, so that a further improvement of optical power is required. Such needs have led to increased output of lasers. However, the greater the laser output becomes, the more difficult it becomes to produce the laser device, and problems such as increased power consumption and heating become more outstanding. Therefore, it is necessary to reduce the optical transmission losses in the optical system as much as possible.

In the device (FIG. **11)** disclosed in Japanese Laid-Open Patent Publication No. 2001-14714, regardless of whether recording/reproduction is performed for a DVD or a CD, diffraction due to the diffraction grating does not occur when light is transmitted through the polarization hologram **107** in the forward path, i.e., from the light source to the optical disk, so that there is no light transmission loss. However, when reproduction for a CD is performed, light diffraction occurs in the other hologram **113** being used for splitting signal light for the photodetectors, regardless of the polarization direction of the light. The transmittance T of the 0<sup>th</sup> order light produced by the hologram **113** (i.e., transmittance of non-diffracted light) is expressed by eq. 6 below.

$$\text{(eq. 6)}$$

$$T=\cos^2(\pi t(n-1)/\lambda_2)$$

Herein, t is the diffraction grating depth (i.e., depth of the grating grooves), and n is a refractive index of the transparent element on which the diffraction grating is formed.

In order to detect a signal from a CD, it is necessary to produce a certain degree of diffracted light. Therefore, diffraction loss due to the hologram **113** occurs even during the travel of the light for CD reproduction from the light source toward the optical disk. However, the light source for CD reproduction is a semiconductor laser having a wavelength on the order of 780 nm, called an infrared laser, whose output is easy to be enhanced, and whose operation current has a low value. Therefore, it is possible to increase the laser light output so as to compensate for the diffraction loss that occurs due to the insertion of the hologram **113.**

In the device disclosed in Japanese Laid-Open Patent Publication No. 2000-76689, when light which is emitted from the semiconductor laser **121** or **122** functioning as a light source for CDs or DVDs travels through the detection hologram **126** or **127** for CDs or DVDs, diffraction occurs regardless of the polarization direction. Therefore, diffraction loss occurs with the light in the forward path.

Moreover, in the forward path of the optical system, the light which has been emitted from either light source (semiconductor laser 121 or 122) will travel through both detection holograms 126 and 127 for DVDs and CDs. Therefore, two-fold diffraction losses occur. In order to prevent such two-fold diffraction losses, care is taken to prevent diffraction in one of the two detection holograms by optimizing the depth and refractive index of the diffraction gratings. For example, the undulations of the diffraction grating of the detection hologram for DVDs are prescribed so that, when light for CD reproduction travels through the detection hologram for DVDs, a $2\pi$ phase shift occurs with respect to the wavelength of the light for CD reproduction. On the other hand, when light for DVDs is transmitted through the detection hologram for CDs, a $2\pi$ shift of the undulations of the diffraction grating exists with respect to the DVD wavelength.

In the above device, the detection holograms **126** and **127** are close to the light sources (semiconductor lasers **121** and **123).** Therefore, the diffraction gratings have a small diffraction pitch, and the grating grooves are formed deep so as not to diffract the other one of the two kinds of light. For example, in order to employ a detection hologram which is located 2 mm away on the optical axis from an emission point (light source) of light for DVDs to cause diffracted light to be incident on a photodetector which is 700 $\mu$m away from the light source, it is necessary to set the diffraction pitch $\Lambda$ of the detection hologram to be a size determined by eq. 7 below.

$$\text{(eq. 7)}$$

$$\Lambda=\lambda_1/\sin(\text{atn}(\theta))=0.65/\sin(\text{atn}(0.7/2))=2.0 \ \mu\text{m}$$

On the other hand, a grating groove depth $d_3$ which provides a phase difference of $2\pi$ with respect to light for DVDs but causes light for CDs to be diffracted is determined based on eq. 8 below.

$$\text{(eq. 8)}$$

$$n_3 \times d_3 = m\lambda_1 \quad (m=1, \ 2, \ 3,... \ \text{etc.})$$

Given that $n_3=2.0$ and $\lambda_1=0.65$, it follows that $d_3=0.33 \ \mu$m.

The ratio of the grating groove depth $d_3$ to the grating pitch $\Lambda$ (aspect ratio $=d_3/\Lambda$) is about $0.33/(2/2)=0.33$.

In the case where the machining dimensions of the diffraction grating are large, it is possible to form a grating groove pattern having an ideally rectangular cross section exhibiting the aforementioned aspect ratio. However, as the dimensions of micromachining become smaller, the machining accuracy lowers, so that the cross section would vary from rectangular to sinusoidal, thereby resulting in a 10 to 20% diffraction loss. In other words, in order to allow light from a laser light source to be efficiently transmitted to an optical disk surface, it is desirable to employ a polarization type diffraction element, which does not allow unnecessary diffraction to occur.

Another problem occurs due to the birefringence of the base material of the optical disk. The base material of an optical disk is produced by molding a resin which is optically transparent. Since resin is a polymer material, its refractive index shows anisotropy. Therefore, if a portion of the resin flows so as to become lopsided during the molding process, a part or whole of the disk will show birefringence. In particular, birefringence is more often outstanding with greater base material thicknesses, e.g., as in the case of CDs. Moreover, many optical disks are commercially available which go beyond the birefringence tolerances that are stipulated by standards, this being in order to increase the production amount while reducing the price, and hence it is a requirement on the part of the optical disk apparatus to be able to support such optical disks as well. Note that the birefringence of an optical disk base material is such that an axis of anisotropy is likely to appear in a radial direction from the inner periphery side to the outer periphery side of the disk.

If the optical disk base material shows birefringence, the polarization state of any light which is transmitted through the base material changes. This results in a problem in that the amount of light which is diffracted by the polarization hologram varies depending on the birefringence of the base material. As an extreme case, the device (FIG. 11) disclosed in Japanese Laid-Open Patent Publication No. 2001-14714 is directed to a case where the slower axis of the base material of the optical disk is slanted by 45° with respect to the disk radial direction and the base material shows the same retardation as that of a 1/4 wavelength plate. In this case, the polarization direction of the light returned from the optical disk is perpendicular to the polarization direction of the light entering the polarization hologram from the light source, and the light returned from the optical disk is completely diffracted by the polarization hologram **109.** Then, since there is no light to be diffracted by the detection hologram **113** for CDs so as to be led to the photodetectors **115,** the amount of signal light becomes 0.

On the other hand, in the device (FIG. **12**) disclosed in Japanese Laid-Open Patent Publication No. 2000-76689, neither the hologram for CD detection nor the hologram for DVD detection depends on polarization. Therefore, even if the disk base material has birefringence, the amount of detected light does not vary because of its influence. In other words, from the standpoint of avoiding the problems associated with birefringence of the disk base material, it is preferable to employ a hologram of a type which does not depend on polarization.

As described above, with the device (FIG. 11) disclosed in Japanese Laid-Open Patent Publication No. 2001-14714, it is possible to efficiently lead the short-wavelength light for DVDs to an optical disk surface. However, since the polarization hologram 109 is employed, the signal from the CD may become 0 due to the influence of the birefringence of the disk base material. This unfavorably affects not only the reading of an RF signal, but also focusing and tracking control.

On the other hand, the device (FIG. 12) disclosed in Japanese Laid-Open Patent Publication No. 2000-76689 has a problem in that the optical transmission efficiency is low, although there is no influence of the birefringence of the optical disk base material because the holograms 126 and 127 do not have polarization dependence.

Thus, there has been no conventional hologram (optical diffraction element) which shows a high optical transmission efficiency for both the forward and return paths of light, and yet is free from the influence of the birefringence of an optical disk base material.

The present invention was made in order to solve the aforementioned problems, and an objective thereof is to provide an optical diffraction element which shows a high optical transmission efficiency and yet is free from the influence of the birefringence of an optical disk base material, and an optical disk apparatus incorporating such an element.

## DISCLOSURE OF INVENTION

An optical diffraction element according to the present invention is an optical diffraction element to be disposed in an optical path through which a plurality of light beams of different wavelengths travel, comprising: a periodic structure which, when a first light beam having a wavelength $\lambda_1$ among the plurality of light beams is in a linear polarization state polarized in a first direction X, allows the first light beam to be substantially completely transmitted therethrough, but when the first light beam is in a linear polarization state polarized in a second direction Y perpendicular to the first direction, causes the first light beam to be substantially completely diffracted, wherein the optical diffraction element diffracts at least a portion of a second light beam having a wavelength $\lambda_2$ among the plurality of light beams, the wavelength $\lambda_2$ being different from the wavelength $\lambda_1$ of the first light beam, regardless of a polarization state thereof.

In a preferred embodiment, the periodic structure converts the first light beam to light having a periodic phase difference of about $2n\pi$ (where n is an integer other than 0) when the first light beam is linearly polarized light polarized in the first direction X, and converts the first light beam to light having a periodic phase difference of about $(2m+1)\pi$ (where m is an integer) when the first light beam is linearly polarized light polarized in the second direction Y, and, converts the second light beam to light having a periodic phase difference of about $2n\pi\lambda_1/\lambda_2$ when the second light beam is linearly polarized light polarized in a direction substantially equal to the first direction X, and converts the second light beam to light having a phase difference of about $(2m+1)\pi\lambda_1/\lambda_2$ when the second light beam is linearly polarized light polarized in a direction substantially equal to the second direction Y.

In a preferred embodiment, given a periodic refractive index difference $\Delta n_1$ when the wavelength of the linearly polarized light polarized in the first direction X is $\lambda_1$ and a refractive index difference $\Delta n_2$ when the wavelength is $\lambda_2$, and given a periodic refractive index difference $\Delta n_{11}$ when the wavelength of the linearly polarized light polarized in the second direction Y is $\lambda_1$ and a refractive index difference $\Delta n_{22}$ when the wavelength is $\lambda_2$, the periodic structure converts the first light beam to light having a periodic phase difference of about $2N\pi$ (where N is an integer other than 0) when the first light beam is linearly polarized light polarized in the first direction X, and converts the first light beam to light having a periodic phase difference of about $(2M+1)\pi$ (where M is an integer) when the first light beam is linearly polarized light polarized in the second direction Y, and, converts the second light beam to light having a periodic phase difference of a phase difference of about $2N\pi \Delta n_2\lambda_1/(\Delta n_1\lambda_2)$ when the second light beam is linearly polarized light polarized in a direction substantially equal to the first direction X, and converts the second light beam to light having a phase difference of about $(2M+1)\pi \Delta n_{22}\lambda_1/(\Delta n_{11}\lambda_2)$ when the second light beam is linearly polarized light polarized in a direction substantially equal to the second direction Y.

In a preferred embodiment, the periodic structure has first regions A and second regions B arranged alternately and periodically; each first region and each second region have at least one layer; and with respect to linearly polarized light of the wavelength $\lambda_1$ having a polarization direction in the direction X, an $i^{th}$ layer (i=1, 2, 3,... I) (where I is a total number of layers in each A region including any layer of air) of each region A has a refractive index $n_{1A}$ (i) and a thickness $t_A$ (i), and a $j^{th}$ layer (j=1, 2, 3,... J) (where J is a total number of layers in each B region including any layer of air) of each region B has a refractive index $n_{1B}$ (j) and a thickness $t_B$(j), and with respect to linearly polarized light of the wavelength $\lambda_1$ having a polarization direction in the direction Y perpendicular to the direction X, an $i^{th}$ layer (i=1, 2, 3, ... I) of each region A has a refractive index $n_{11A}$ (i) and a $j^{th}$ layer (j=1, 2, 3,... J) of each region B has a refractive index $n_{11B}$ (j) , where,

$$St_A(i)=St_B(j) \text{ holds true;}$$

and

$$S(n_{1A}(i) \times t_A(i)) - S(n_{1B}(j) \times t_B(j)) = L\lambda_1$$

(where L is an integer other than 0) and

$$S(n_{11A}(i) \times t_A(i)) - S(n_{11B}(j) \times t_B(j)) = (2M+1)\lambda_1/2$$

(where M is an integer),
or, alternatively,

$$S(n_{1A}(i) \times t_A(i)) - S(n_{1B}(j) \times t_B(j)) = (2M+1)\lambda_1/2$$

(where M is an integer) and

$$S(n_{11A}(i) \times t_A(i)) - S(n_{11B}(j) \times t_B(j)) = L\lambda_1$$

(where L is an integer other than 0)
are satisfied.

In a preferred embodiment, the periodic structure has, within a layer of a thickness d, regions of refractive index anisotropy and regions of refractive index isotropy arranged alternately and periodically; and the regions of refractive index anisotropy have refractive indices of no and $n_1$ with respect to ordinary light and extraordinary light, respectively, of the wavelength $\lambda_1$, and the regions of refractive index isotropy have a refractive index of $n_3$ with respect to light of the

wavelength $\lambda_1$, where d, $n_1$, $n_2$, $n_3$, and $\lambda_1$ satisfy:

$$d(n_3-n_1)=L\lambda_1$$

(where L is an integer other than 0)
and

$$d(n_3-n_2)=(2M+1)\lambda_1/2$$

(where M is an integer),
or, alternatively,

$$d(n_3-n_1)=(2M+1)\lambda_1/2$$

(where M is an integer)
and

$$d(n_3-n_2)=L\lambda_1$$

(where L is an integer other than 0).
In a preferred embodiment, the regions of refractive index anisotropy are formed of a patterned thin organic film on a transparent substrate.
In a preferred embodiment, the periodic structure alternately and periodically has, within a layer of a thickness d, first and second regions of refractive index anisotropy; and the first regions of refractive index anisotropy have refractive indices no and $n_1$ with respect to ordinary light and extraordinary light, respectively, of the wavelength $\lambda_1$, and the second regions of refractive index anisotropy have refractive indices $n_{01}$ and $n_{11}$ with respect to the ordinary light and the extraordinary light, respectively, where,
d, no, $n_1$, $n_{01}$, and $n_{11}$ satisfy:

$$d(n_0-n_{01})=L\lambda_1$$

(where L is an integer other than 0)
and

$$d(n_1-n_{11})=(2M+1)\lambda_1/2$$

(where M is an integer)
or alternatively,

$$d(n_0-n_{01})=(2M+1)\lambda_1/2$$

(where M is an integer)
and

$$d(n_1 - n_{11}) = L\lambda_1$$

(where L is an integer other than 0).

In a preferred embodiment, the periodic structure has regions of refractive index anisotropy having a thickness $d_1$ and second regions of refractive index anisotropy having a thickness $d_2$ arranged alternately and periodically; and the first regions of refractive index anisotropy have refractive indices no and $n_1$ with respect to ordinary light and extraordinary light, respectively, of the wavelength $\lambda_1$, and the second regions of refractive index anisotropy have refractive indices $n_{01}$ and $n_{11}$ with respect to the ordinary light and the extraordinary light, respectively, where,

$$d_2(n_{01} - 1) - d_1(n_0 - 1) = L\lambda_1$$

(where L is an integer other than 0)
and

$$d_2(n_{11} - 1) - d_1(n_1 - 1) = (2M+1)\lambda_1/2$$

(where M is an integer),
or, alternatively,

$$d_2(n_{01} - 1) - d_1(n_0 - 1) = (2M+1)\lambda_1/2$$

(where M is an integer)
and

$$d_2(n_{11} - 1) - d_1(n_1 - 1) = L\lambda_1$$

(where L is an integer other than 0)
are satisfied.

In a preferred embodiment, the periodic structure has first and second regions of refractive index anisotropy arranged alternately and periodically within a layer of a thickness d, and a film $F_1$ formed on the first or second regions of refractive index anisotropy, the film $F_1$ having a refractive index $n_4$ and a thickness t; and the first regions of refractive index anisotropy have refractive indices no and $n_1$ with respect to ordinary light and extraordinary light, respectively, of the wavelength $\lambda_1$, and the second regions of refractive index anisotropy have refractive indices $n_{01}$ and $n_{11}$ with respect to the ordinary light and the extraordinary light, respectively, where, when the film $F_1$ exists on the first regions of refractive index anisotropy,

$$d(n_{01} - n_0) - t(n_4 - 1) = L\lambda_1$$

(where L is an integer other than 0)
and

$$d(n_{11} - n_1) - t(n_4 - 1) = (2M+1)\lambda_1/2$$

(where M is an integer), or, alternatively,

$$d(n_{01}-n_0)-t(n_4-1)=(2M+1)\lambda_1/2$$

(where M is an integer)
and

$$d(n_{11}-n_1)-t(n_4-1)=L\lambda_1$$

(where L is an integer other than 0)
are satisfied, and
when the film $F_1$ exists on the second regions of refractive index anisotropy,

$$d(n_{01}-n_0)-t(1-n_4)=L\lambda_1$$

(where L is an integer other than 0)
and

$$d(n_{11}-n_1)-t(1-n_4)=(2M+1)\lambda_1/2$$

(where M is an integer),
or, alternatively,

$$d(n_{01}-n_0)-t(1-n_4)=(2M+1)\lambda_1/2$$

(where M is an integer)
and

$$d(n_{11}-n_1)-t(1-n_4)=L\lambda_1$$

(where L is an integer other than 0)
are satisfied.

In a preferred embodiment, the film $F_1$ is formed by lift-off technique.

In a preferred embodiment, the periodic structure is formed by filling dents in undulations periodically formed on a substrate having refractive index anisotropy with a material having refractive index isotropy.

In a preferred embodiment, the periodic structure is formed by filling dents in undulations periodically formed on a substrate having refractive index anisotropy with a material having refractive index anisotropy.

In a preferred embodiment, polarization directions of at least two of the plurality of light beams are substantially perpendicular to each other.

In a preferred embodiment, the optical diffraction element comprises aperture restricting means for varying an aperture area for allowing a light beam to be transmitted therethrough in accordance with a wavelength of the light beam.

In a preferred embodiment, the optical diffraction element has formed thereon a stepped structure of concentric circles, including steps each being equal to an integer multiple of a wavelength of at least one light beam among the plurality of light beams having different wavelengths.

An optical information processing device according to the present invention is an optical information processing device capable of writing data to an optical information medium of a plurality of types and/or reading data from the optical information medium, comprising: a light source for forming a plurality of light beams of different wavelengths; an objective lens for converging the light beams to form a light spot on a signal surface of the optical information medium; an optical diffraction element and a wavelength plate disposed between the light source and the objective lens; and a photodetector for detecting an intensity of the light beams reflected from the optical information medium, wherein, with respect to at least two light beams among the plurality of light beams, the optical diffraction element is disposed in a portion common to an optical path from the light source to the objective lens and an optical path reflecting from the signal surface of the optical information medium to the photodetector; among the at least two light beams, the optical diffraction element periodically causes a phase difference of about $2n\pi$ (where n is an integer other than 0) in a first light beam having a wavelength $\lambda_1$, and periodically causes a phase difference of about $2n\pi\lambda_1/\lambda_2$ in a second light beam having a wavelength $\lambda_2$; the first light beam having been transmitted through the optical diffraction element is converged on the signal surface of a first optical information medium via the objective lens, and the first light beam reflected from the signal surface enters the optical diffraction element via the objective lens, thus being periodically imparted with a phase difference of about $2n\pi + \alpha$ (where $\alpha$ is a real number other than 0) by the optical diffraction element; and the second light beam having been transmitted through the optical diffraction element is converged on the signal surface of a second optical information medium via the objective lens, and the second light beam reflected from the signal surface enters the optical diffraction element via the objective lens, thus being periodically imparted with a phase difference of about $(2n\pi+\alpha)\lambda_1/\lambda_2$ by the optical diffraction element.

In a preferred embodiment, $\alpha$ associated with the first light beam is $(2m+1)\pi$ (where m is an integer).

An optical information processing device according to the present invention is an optical information processing device capable of writing data to an optical information medium of a plurality of types and/or reading data from the optical information medium, comprising: a light source for forming a plurality of light beams of different wavelengths; an objective lens for converging the light beams to form a light spot on a signal surface of the optical information medium; an optical diffraction element and a wavelength plate disposed in a portion common to an optical path from the light source to the objective lens and an optical path reflecting from the optical information medium to the photodetector; and a photodetector for detecting an intensity of the light beams reflected from the optical information medium, wherein, the optical diffraction element comprises any of the aforementioned optical diffraction elements.

In a preferred embodiment, the optical information processing device comprises means for moving the objective lens, wherein the optical diffraction element is mounted on the means for moving the objective lens.

In a preferred embodiment, the wavelength plate has a retardation of about $(2M+1)\lambda_1/4$ (where M is an integer) with respect to a light beam having a wavelength $\lambda_1$ among the plurality of light beams, and has a retardation of about $N\lambda_2$ (where N is an integer) with respect to a light beam having a wavelength $\lambda_2$.

In a preferred embodiment, the wavelength plate has a retardation of about $(2M+1)\lambda_1/4$ (where M is an integer) with respect to a light beam having a wavelength $\lambda_1$ among the plurality of light beams, and has a retardation of $(2N+1)\lambda_2/2$ (where N is an integer) with respect to a light beam of a wavelength $\lambda_2$.

In a preferred embodiment, the at least two light beams are polarized in perpendicular directions to each other when entering the optical diffraction element after being emitted from the light source.

An electronic appliance according to the present invention comprises: any of the aforementioned optical information processing devices; and a driving section for rotating recording media produced according to a plurality of different standards.

## BRIEF DESCRIPTION OF DRAWINGS

FIGS. **1 (a)** and **(b)** are diagrams showing the fundamental operation of an optical diffraction element according to the present invention.

FIG. **2** is a cross-sectional view showing the structure of a first embodiment of an optical information processing device according to the present invention.

FIGS. **3(a)** and **(b)** are diagrams showing the operation of a polarization element composed of an optical diffraction element according to the present invention and a wavelength plate.

FIG. **4(a)** is a diagram showing light which is split by an optical diffraction element **5** according to the first embodiment being incident to detectors **3a, 3b, 3c,** and **3d.**

FIG. **4(b)** is a plan view showing an exemplary positional relationship between detected light and the detectors **3a, 3b, 3c,** and **3d.** FIG. **4(c)** is a plan view schematically showing a groove pattern of the optical diffraction element **5.**

FIG. **5** is a cross-sectional view showing the structure of an optical diffraction element used in the first embodiment of the present invention.

FIGS. **6(a)** to **(c)** are diagrams showing various embodiments of the optical diffraction element of the present invention.

FIG. **7** is a cross-sectional view showing the structure of another embodiment of the optical diffraction element of the present invention.

FIG. **8** is a cross-sectional view showing the structure of still another embodiment of the optical diffraction element of the present invention.

FIG. **9** is a cross-sectional view showing the structure of still another embodiment of the optical diffraction element of the present invention.

FIG. **10** is a graph showing the relationship between side etching, taper, and diffraction efficiency in the optical diffraction element of the present invention.

FIG. **11** is a cross-sectional view showing the structure of a first conventional example of an optical disk apparatus.

FIG. **12** is a cross-sectional view showing the structure of a second conventional example of an optical disk apparatus.

## BEST MODE FOR CARRYING OUT THE INVENTION

In the present invention, in order to downsize an optical pickup, light sources for projecting light beams of different wavelengths are provided in proximity with each other or integrated on a single chip, and an optical diffraction element and a photodetector are used in a shared manner with respect to light beams of different wavelengths.

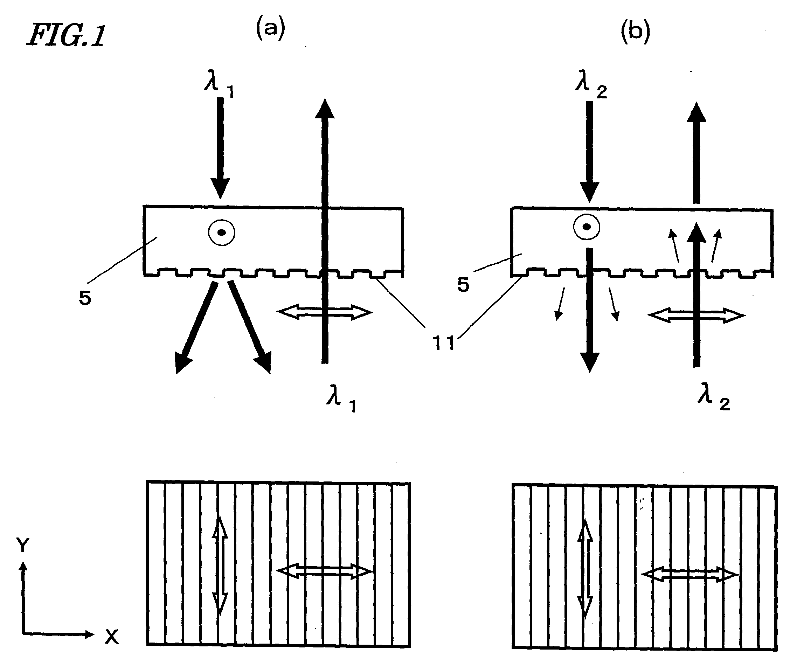

FIG. **1(a)** shows a manner in which light beams of a wavelength $\lambda_1$ enter the optical diffraction element 5 of the present invention. In the upper part of FIG. **1(a)** is shown a cross section of the optical diffraction element **5**, while the lower part schematically shows a frontal portion of the optical diffraction element **5**. A light beam (wavelength $\lambda_1$) which is polarized in a polarization direction that is parallel to a first direction **X,** as shown in FIG. **1(a),** is able to be transmitted through the optical diffraction element 5 while being hardly diffracted by a periodic structure **11** of the optical diffraction element 5. However, a light beam (wavelength $\lambda_1$) which is polarized in a polarization direction that is parallel to a second direction **Y** is substantially completely diffracted by the periodic structure **11** of the optical diffraction element **5.**

On the other hand, FIG. **1(b)** shows a manner in which light beams of a wavelength $\lambda_2$ enter the optical diffraction element 5. It is assumed that the relationship $\lambda_1<\lambda_2$ exists. In the upper part of FIG. **1(b)** is shown a cross section of the optical diffraction element **5,** while the lower part schematically shows a frontal portion of the optical diffraction element **5.** In the case of a light beam whose wavelength is $\lambda_2$, as shown in FIG. **1(b),** a portion thereof is diffracted by the periodic structure **11** of the optical diffraction element **5,** while the rest is transmitted therethrough, regardless of whether it is polarized in a polarization direction that is parallel to the first direction **X** or polarized in a polarization direction that is parallel to the second direction **Y.**

Thus, the optical diffraction element 5 of the present invention is characterized in that it has polarization dependence and wavelength dependence. However, the most important feature thereof is that: with respect to a light beam of the wavelength $\lambda_1$, a clear difference between presence and absence of diffraction exists depending on the polarization direction; on the other hand, with respect to a light beam of the wavelength $\lambda_2$, a portion of the incident light is always diffracted irrespective of its polarization direction.

By employing such a novel optical diffraction element 5 for an optical pickup, it becomes possible to always derive diffracted light from a light beam (e.g., a light beam for CDs) which has a relatively long wavelength and whose output is easy to be enhanced, irrespective of any changes in its polarization state. Therefore, the problem which is present in the conventional device shown in FIG. **11,** i.e., zero signal being detected from a CD due to the influence of the birefringence of the disk base material, can be solved.

The polarization hologram **107** shown in FIG. **11** functions as an optical diffraction element with respect to a light beam having the wavelength for DVDs, but does not function as an optical diffraction element with respect to a light beam having the wavelength for CDs, which is the reason why another hologram **113** for CDs is indispensable. In the conventional device shown in FIG. **12,** too, separate diffraction gratings must be employed for a light beam for CDs and for a light beam for DVDs.

As opposed to such conventional techniques, the present invention makes it possible to perform appropriate diffraction not only for a light beam for DVDs but also for a light beam for CDs, by using a single optical diffraction element 5.

Hereinafter, embodiments of the present invention will be described with reference to the figures.

(Embodiment 1)

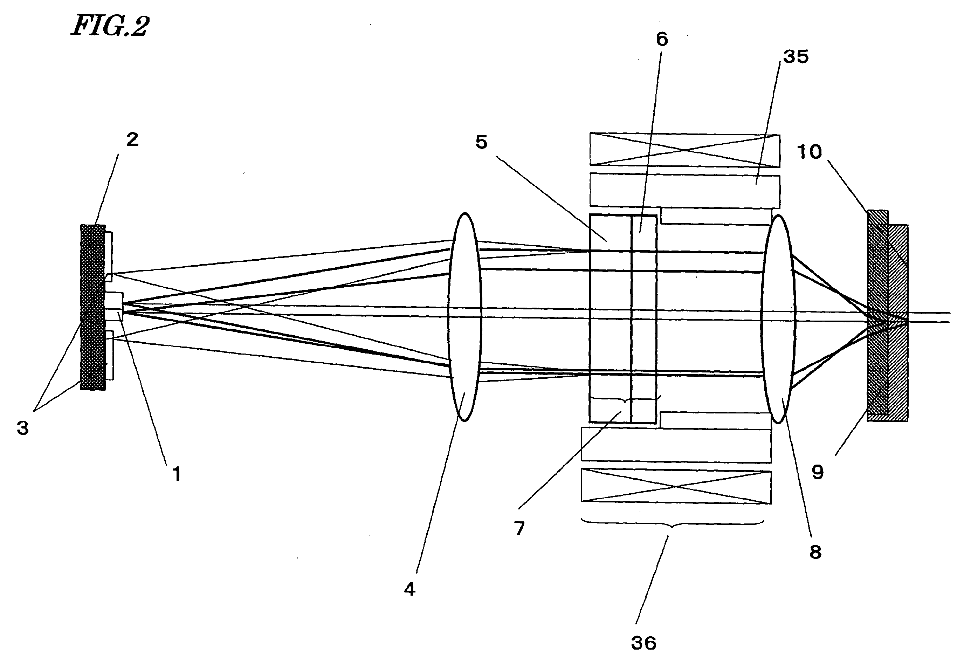

First, with reference to FIG. 2 to FIG. 5, a first embodiment of an optical information processing device according to the present invention will be described. The optical information processing device of the present embodiment is an optical pickup comprising the optical diffraction element of the present invention. FIG. 2 shows the overall structure of this optical pickup.

The optical pickup of FIG. 2 is used in an optical disk apparatus which is capable of writing data to a plurality of types of optical disks, and/or reading data from the optical disks. When performing recording/reproduction operation, an optical disk is rotated by a driving section (not shown), e.g., a motor, in an optical disk apparatus.

The optical pickup of the present embodiment comprises: a light source for producing light beams of different wavelengths; an objective lens for converging a light beam and producing a light spot on a signal surface of an optical disk; an optical diffraction element and a wavelength plate disposed between the light source and the objective lens;

and a photodetector for detecting the intensity of the light beam reflected from the optical disk. Although the light source is preferably composed of a single laser chip which projects light of different wavelengths, the light source may alternatively be two types of laser chips disposed proximate to each other.

The optical diffraction element of the present invention is disposed in a portion common to an optical path from the light source to the objective lens and an optical path reflecting from the signal surface of the optical disk to the photodetector.

Hereinafter, the structure of the optical pickup of the present embodiment will be described in more detail.

First, FIG. 2 will be referred to. A photodetector 3 in the present embodiment is formed on a semiconductor substrate 2 such as a silicon chip. A laser chip 1 which emits two kinds of laser light, i.e., wavelength $\lambda_1$ and wavelength $\lambda_2$, is mounted on the substrate 2. The photodetector 3 is composed of a plurality of photodiodes for converting light into electrical signals by photoelectric effects. As for the laser light to be emitted by the laser chip 1, the wavelength $\lambda_1$ is about 650 nm, and the wavelength $\lambda_2$ is about 800 nm, for example. In the present embodiment, the laser light of the wavelength $\lambda_1$ is used for DVDs , whereas the laser light of the wavelength $\lambda_2$ is used for CDs.

The light of the wavelength $\lambda_1$ which is emitted from the laser chip **1** is collimated by a collimating lens **4,** and thereafter transmitted through a polarization element **7**. The polarization element **7** is an element which integrates the optical diffraction element **5** and a wavelength plate **6**. The polarization element 7 is attached to a supporting member **35** together with an objective lens **8,** and is driven by an actuator **36** integrally with the objective lens 8.

The optical diffraction element **5** included in the polarization element 7 periodically causes a phase difference of about 2n $\pi$ (where n is an integer other than 0) in the light of the wavelength $\lambda_1$ which enters from the side of the laser chip **1,** which is a light source. In other words, light of the wavelength $\lambda_1$ which enters from the light source side can be transmitted almost without any diffraction.

The light (wavelength $\lambda_1$) which has been transmitted through the polarization element **7** is converged by the objective lens 8 onto a recording surface 9 of the optical disk, and reflected therefrom. The reflected light again goes through the objective lens 8 to enter the polarization element **7,** and is diffracted by the optical diffraction element **5** in the polarization element **7**. The optical diffraction element **5** periodically causes a phase difference of about 2n $\pi$ + $\alpha$ (where $\alpha$ is a real number other than 0) in the light of the wavelength $\lambda_1$ which comes reflected from the optical disk. In other words, the optical diffraction element **5** diffracts at least a portion of the light of the wavelength $\lambda_1$ which enters from the optical disk side. Note that, when $\alpha$ is (2m+1) $\pi$ (where m is an integer), substantially all of the light of the wavelength $\lambda_2$ which enters from the optical disk side is diffracted. The light which has been diffracted by the optical diffraction element **5** goes through the collimating lens **4** and enters the photodetector **3**. The photodetector **3** generates electrical signals which are in accordance with changes in the light amount. These electrical signals are a focusing control signal, a tracking control signal, and an RF signal.

On the other hand, the light of the wavelength $\lambda_2$ which has been emitted from the laser chip **1** is also collimated by the collimating lens **4,** and is transmitted through the polarization element **7**. The optical diffraction element 5 included in the polarization element **7** periodically causes a phase difference of about 2n $\pi$ $\lambda_1/\lambda_2$ in the light of the wavelength $\lambda_2$ which enters from the side of the laser chip 1, which is a light source. Therefore, a portion of the light of the wavelength $\lambda_2$ is diffracted by the optical diffraction element 5, while the rest is transmitted through the optical diffraction element **5.**

The light which has been transmitted through the diffraction element **5** is converged by the objective lens 8 onto a recording surface **10** of an optical disk having a different base material thickness, and reflected by the recording surface **10.** The reflected light again goes through the objective lens 8 to enter the polarization element **7,** and is diffracted by the optical diffraction element **5** in the polarization element **7**. The optical diffraction element **5** periodically causes a phase difference of about (2n$\pi$+$\alpha$)$\lambda_1/\lambda_2$ (where $\alpha$ is a real number other than 0) in the light of the wavelength $\lambda_2$ which comes reflected from the optical disk. The light which has been diffracted from the optical diffraction element **5** goes through the collimating lens **4,** and enters the photodetector **3**. The photodetector **3** generates electrical signals which are in accordance with changes in the light amount. These electrical signals are a focusing control signal, a tracking control signal, and an RF signal.

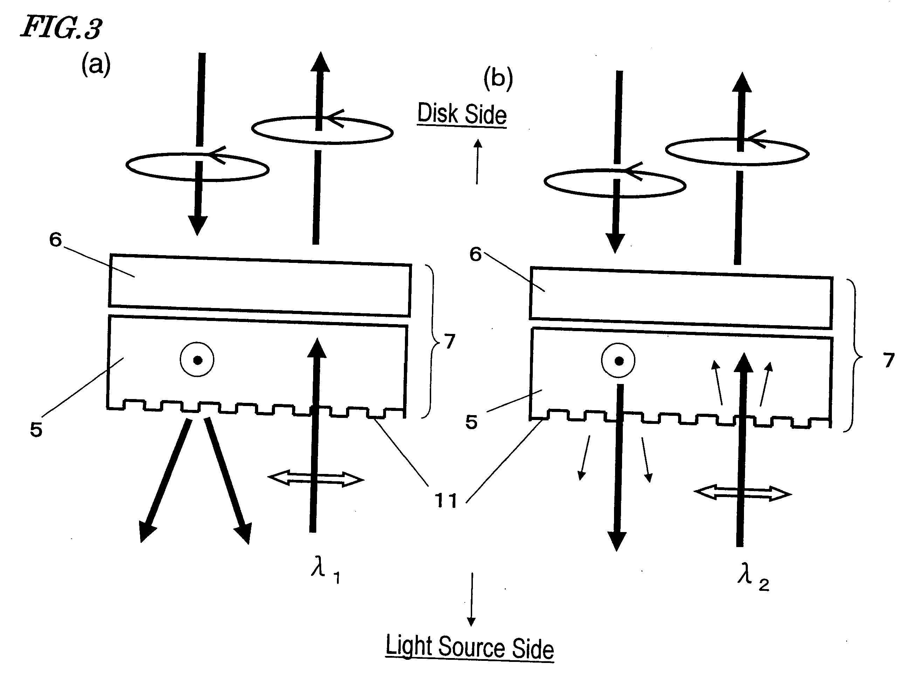

FIGS. **3(a)** and **(b)** are diagrams schematically showing the polarization dependence of diffraction by the polarization element **7** of FIG. **2,** with respect to light of the wavelengths $\lambda_1$ and $\lambda_2$.

FIG. **3(a)** schematically shows cases where light of the wavelength $\lambda_1$ travels through the polarization element **7** in opposite directions. Light of the wavelength $\lambda_1$ which enters the polarization element **7** from the light source side (i.e., the lower side in the figure) is, for example, linearly polarized light having a polarization direction which is parallel to the plane of the figure. Such light is able to be transmitted through the diffraction element **5** having the periodic structure **11.** Note that the periodic structure **11** of the illustrated polarization element **7** is composed of diffraction grooves extending in a direction perpendicular to the plane of the figure. The periodic structure **11** of the optical diffraction element **5** has polarization dependence such that, when linearly polarized light (wavelength $\lambda_1$) whose polarization direction is parallel to the plane of the figure is transmitted through the optical diffraction element **5**, a phase difference of 2N $\pi$ (where N is an integer other than 0) occurs in the transmitted light, depending on the incident position on the periodic structure **11**. The optical diffraction element **5** of the present embodiment is quite distinct from the diffraction grating described in Japanese Laid-Open Patent Publication No. 2001-14714 (the hologram **107** of FIG. 11) in that N is not 0. In the present embodiment, since the periodic phase difference occurring in the light transmitted through the optical diffraction element **5** is equal to an integer multiple of $2\pi$ (i.e., any optical path difference occurring in the optical diffraction element 5 is equal to an integer multiple of the wavelength $\lambda_1$), it is as though the periodic structure **1** did not even exist for light of the wavelength $\lambda_1$, according to the diffraction principle of light. Therefore, the aforementioned light is not diffracted by the optical diffraction element 5, but is transmitted therethrough.

The light which has thus been transmitted through the optical diffraction element **5** then travels through the wavelength plate **6**. With respect to light of the wavelength $\lambda_1$, the wavelength plate **6** has a retardation corresponding to the $(m\pm1/4)$ wavelength (where m is an integer). In the present embodiment, the wavelength plate 6 functions as a 5/4 wavelength plate with respect to light of the wavelength $\lambda_1$ (650 nm). Therefore, linearly polarized light of the wavelength $\lambda_1$ is converted by the wavelength plate 6 into circularly polarized light.

The light (circularly polarized light) which has been reflected back by the optical disk (not shown) is converted into linearly polarized light by the wavelength plate 6. The polarization direction (which is perpendicular to the plane of the figure) of this linearly polarized light is perpendicular to the polarization direction of the light which has entered the optical diffraction element **5** from the light source side. In such linearly polarized light, the periodic structure **11** of the diffraction element **5** periodically causes a phase difference of $(2M+1)\pi$ (where M is an integer) depending on the incident position. Therefore, the linearly polarized light is completely diffracted, according to the diffraction principle of light (see eq. 2).

Next, with reference to FIG. **3(b),** the operation of the polarization element **7** with respect to the light of the wavelength $\lambda_2$ will be described.

As shown in FIG. **3(b),** when the light of the wavelength $\lambda_2$ (linearly polarized light whose polarization direction is parallel to the plane of the figure) entering the optical diffraction element 5 from the light source is incident to the polarization element 7, a phase difference of about $2N\pi\lambda_1/\lambda_2$ is caused by the periodic structure **11** of the optical diffraction element **5**. Since N is not 0, the phase difference caused is not 0. Therefore, a certain degree of diffraction of light of the wavelength $\lambda_2$ occurs in the optical diffraction element **5**.

Moreover, since the material of the optical diffraction element **5** causes a wavelength dispersion strictly speaking, a refractive index difference exists between light of the wavelength $\lambda_1$ and light of the wavelength $\lambda_2$. Assuming that the medium composing the periodic structure **11** has periodic refractive index differences of $\Delta n_1$ and $\Delta n_2$ with respect to light of the wavelengths $\lambda_1$ and $\lambda_2$, respectively, a phase difference of $2N\pi\Delta n_2 \cdot \lambda_1/(\Delta n_1 \cdot \lambda_2)$ occurs in the periodic structure **11,** which phase difference is not negligible if the material of the optical diffraction element **5** causes a large wavelength dispersion.

Assuming that $\lambda_1$=650 nm (light of the wavelength for DVDs) ; $\lambda_2$=800 nm (light of the wavelength for CDs) ; and N=1, the transmission efficiency of the non-diffracted light ($0^{th}$ order light) is expressed by eq. 9 below.

$$(eq. \ 9)$$

$$\cos^2((2\pi\lambda_1/\lambda_2)/2) = \cos^2((2\pi\times650/800)/2) = 69\%$$

From eq. 9, it can be seen that 39% of the incident light is diffracted by the optical diffraction element **5**.

On the other hand, when the light of the wavelength $\lambda_2$ returned from the optical disk enters the polarization element 7 as shown in FIG. **3(b),** a phase difference of **(2M+1)** $\pi\lambda_1/\lambda_2$ is caused by the periodic structure **11** of the optical diffraction element **5**. Therefore, between light of the wavelength $\lambda_1$ and light of the wavelength $\lambda_2$, it would be impossible to set diffracted light for both light to be 0, unless the light having the relatively greater wavelength equals an integer multiple (twice, three times,... etc.) of the wavelength of the other light.

Note that, strictly speaking, a phase difference of $(2M+1)\pi\Delta n_{22}\lambda_1/(\Delta n_{11}\lambda_2)$ occurs due to the aforementioned wavelength dispersion. $\Delta n_{11}$ and $\Delta n_{22}$ are, respectively, periodic refractive index differences of the periodic structure, with respect to the polarization state of the light of the wavelengths $\lambda_1$ and $\lambda_2$ returning from the optical disk as they enter the optical diffraction element 5 via the wavelength plate **6.**

Assuming that $\lambda_1$=650 nm (light for DVDs) ; $\lambda_2$=800 nm (light for CDs); and M=1, the diffraction efficiencies of the $\pm1^{st}$ order diffracted light are expressed by eq. 10 below.

(eq. 10)

$$(2/\pi)^2 \times \cos^2((\pi\lambda_1/\lambda_2)/2) = \cos^2((\pi \times 650/800)/2) = 8.4\%$$

Any light other than the $\pm$1st order diffracted light is mostly transmitted through the diffraction grating as 0th order light.

Note that the greatest influence of polarization exists when the base material of the CD has a birefringence which is substantially equivalent to that of a 1/4 wavelength plate. In this case, the linearly polarized light is in a direction perpendicular to that when entering. The diffraction efficiency of the $\pm$1st order diffracted light at this time satisfies the perfect diffraction condition, and about 37% of the $\pm$1st order diffracted light returns as signal light. In other words, the amount of returned light varies depending on various polarization states, but is non-zero even in the worst cases.

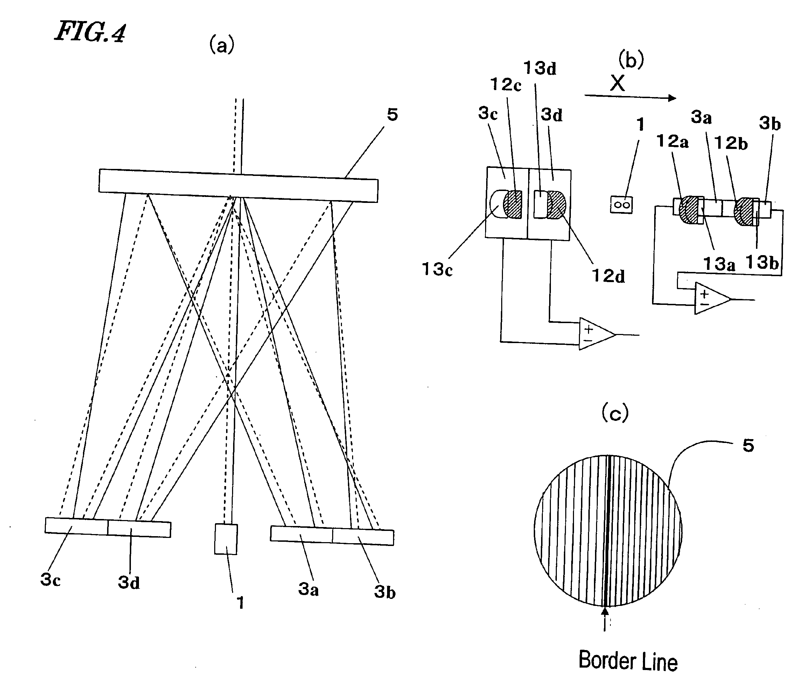

FIG. **4(a)** is a diagram showing light which is split by the optical diffraction element 5 being incident to detectors **3a, 3b, 3c,** and **3d.** FIG. **4(b)** is a plan view showing an exemplary positional relationship between the detected light and the detectors **3a, 3b, 3c,** and **3d.** FIG. **4(b)** is a plan view schematically showing a groove pattern of the optical diffraction element 5.

As shown in FIG. **4(b),** the optical diffraction element 5 is split into two portions by a border line extending in a direction corresponding to the track direction of the optical disk. One of the two split regions diffracts the light reflected from an outer periphery side of the optical disk to the detectors **3b** and **3d,** and the other of the two split regions diffracts the light reflected from an inner periphery side of the optical disk to the detectors **3a** and **3c.** In FIG. **4(a),** solid lines show light beams of the wavelength $\lambda_2$, whereas broken lines show light beams of the wavelength $\lambda_1$. Assuming that the light which is diffracted from the optical diffraction element **5** toward the photodetectors **3a** and **3b** is +1st order light, the light which is diffracted from the optical diffraction element **5** toward the photodetectors 3c and 3d is -1st order light.

In the optical diffraction element **5** above, by introducing a difference between the grating spacing on the right-hand side of the border line and the grating spacing on the left-hand side, the angles of the +1st order light and the -1st order light can be differentiated between the right-hand side and the left-hand side of the border line. In the example shown in FIG. **4,** the grating spacing on the right-hand side of the border line is prescribed to be shorter than the grating spaces on the left-hand side.

If the position of the light beam spot on the optical disk surface is shifted from a track center, an asymmetry appears in the amount of diffracted light. This asymmetry in the amount of diffracted light largely depends on the size of the shift of the light beam spot from the track center. Therefore, through a calculation of subtracting the output of the photodetector 3d from the output of the photodetector **3c,** the asymmetry in the amount of diffracted light can be detected quantitatively. Based on a signal (tracking error signal) which is obtained through such a calculation, tracking detection by push-pull technique can be performed.

Moreover, misfocusing with respect to the optical disk surface appears as a change in the size of the beam spot which is formed on the detector. By performing a calculation of subtracting the output of the photodetector **3b** from the output of the photodetector **3a,** any change in the beam spot size can be detected. Based on a signal which is obtained through the above calculation, a focus detection based on SSD technique (Spot Size Detection technique) can be performed.

Note that data which has been written along a track on an optical disk can be detected (reproduced) by performing, for example, a calculation of adding the output from the photodetector 3c and the output from the photodetector **3d.** A reproduced signal which is obtained through such a calculation may hereinafter be referred to as an "RF signal".

As described earlier, the polarization element 7 of the present embodiment is driven by the actuator 36 integrally with the objective lens **8.** Therefore, even if the objective lens 8 is shifted along the tracking direction (disk radial direction) by following an eccentric motion of an optical disk, no offset occurs in the signal which is obtained through the above calculation. This is because, even if the objective lens 8 is shifted along the tracking direction, the only consequence is that the position of light spots formed on the detectors **3a** to **3d** are shifted along the X direction on each detector. As long as the light-receiving area of each detector is formed sufficiently broad in view of such light spot shifting, no change occurs in the level of the signal which is obtained by the above calculation even if the position of the light spot is moved within the light-receiving area of each detector.

The light entering the optical diffraction element 5 is diffracted at different angles (diffraction angles) depending on different wavelengths. For example, light of the wavelength $\lambda_1$ will be incident to regions denoted by reference numerals **12a** to **12d** to form light spots. On the other hand, light of the wavelength $\lambda_2$ will be incident to regions denoted by reference numerals **13a** to **13d** to form light spots. In the present embodiment, the light-receiving area of each of the detectors **3a** to **3d** has a size for being able to receive the entirety of such light spots, so that light of different wavelengths can be detected by the same detector. In the device of FIG. **11,** two types of photodetectors are required respectively for DVDs and for CDs, thus making it difficult to downsize the device. According to the present invention, however, downsizing is facilitated.

By using the polarization element **7** of the present embodiment, light of the wavelength $\lambda_1$ (e.g., light for DVDs) is hardly diffracted when being transmitted through the optical diffraction element 5 after being emitted from the light source (FIG. **3(a))**. Therefore, the light emitted from the light source is led to the optical disk surface with a high efficiency, while avoiding losses in the light amount. On the other hand, as for light of the wavelength $\lambda_2$ (e.g., light for CDs), decrease in the light amount is reduced after diffraction even if light whose polarization state has changed due to the birefringence of the disk base material returns from the optical disk, so that the signal level does not become 0 even in the worst cases (FIG. **3(b))**.

Note that the wavelength plate 6 of the present embodiment functions as a 5/4 wavelength plate with respect to light of the wavelength $\lambda_1$. In other words, the wavelength plate **6** functions substantially as a 1 wavelength plate with respect to light of the wavelength $\lambda_2$.

In the present invention, instead of the aforementioned wavelength plate, a wavelength plate 6 having a retardation for functioning as a 1/4 wavelength plate with respect to light of the wavelength $\lambda_1$ may be employed. Such a wavelength plate **6** will function substantially as a 1/5 wavelength plate with respect to light of the wavelength $\lambda_2$. Therefore, in the case where the disk base material does not have any birefringence, light returning from the disk has an elliptical polarization state when it enters the optical diffraction element 5 through the wavelength plate 6. This elliptically polarized light has a principal axis in a direction substantially perpendicular to the polarization direction of when light emitted from the light source first enters the optical diffraction element 5, and has a degree of elongation close to being linearly polarized light. When such polarized light enters the optical diffraction element 5, the amount of diffracted light is large, so that the amount of signal light is also large.

The wavelength plate which can be employed in the present invention is not limited to the two types of wavelength plates having the aforementioned specific retardations. In other words, similar effects can be obtained even with a wavelength plate which has a retardation of about $(2M+1)\lambda_1/4$ (where M is an integer) with respect to light of the wavelength $\lambda_1$ and has a retardation of about $N\lambda_2$ (where N is an integer) with respect to light of the wavelength $\lambda_2$.

Alternatively, a wavelength plate which has a retardation of about $(2M+1)\lambda_1/4$ (where M is an integer) with respect to light of the wavelength $\lambda_1$, and has a retardation of about $(2N+1)\lambda_2/2$ (where N is an integer) with respect to light of the wavelength $\lambda_2$ may be employed. By employing such a wavelength plate, light of the wavelength $\lambda_2$ reverts to the same polarization state when reflected back from the optical disk, so that similar effects to the effects in the case where the wavelength plate 6 functions as a 1 wavelength plate with respect to light of the wavelength $\lambda_2$ are obtained.

If the disk base material has birefringence, the polarization state of the light reflected from the optical disk varies in many ways; however, according to the present embodiment, the amount of signal light never lowers to an undetectable level. The reason is that, although the amount of signal light becomes the smallest when the polarization state of the light returning from the optical disk is the same polarization state of the light in the forward path, i.e., linearly polarization, there is a diffraction efficiency of 8.4% (which is non-zero) even in such cases, according to the present embodiment. Therefore, according to the present embodiment, stable signal reproduction and control can be performed even for optical disks having a large birefringence.

Thus, in accordance with the optical pickup of the present embodiment, the efficiency of utilization is enhanced of any light which is emitted from a high-output light source which is difficult to produce or obtain at a low cost because of having a high wavelength, e.g., a light source for DVDs (FIG. **3(a))**. On the other hand, as for optical disks for which a high-output light source can be produced or obtained at a relatively low price, but whose base material is so thick that they are likely to cause changes in the polarization state due to birefringence, e.g., CDs, the influence of changes in the polarization state can be reduced (FIG. **3(b))**.

Moreover, according to the present embodiment, there is realized an optical pickup which can function, with respect to light of different wavelengths, to cause light returning from the optical disk to be led to detectors while allowing light from the light source to be efficiency transmitted therethrough. As a result, it becomes possible to provide a downsized optical pickup having a small number of elements at a low cost.

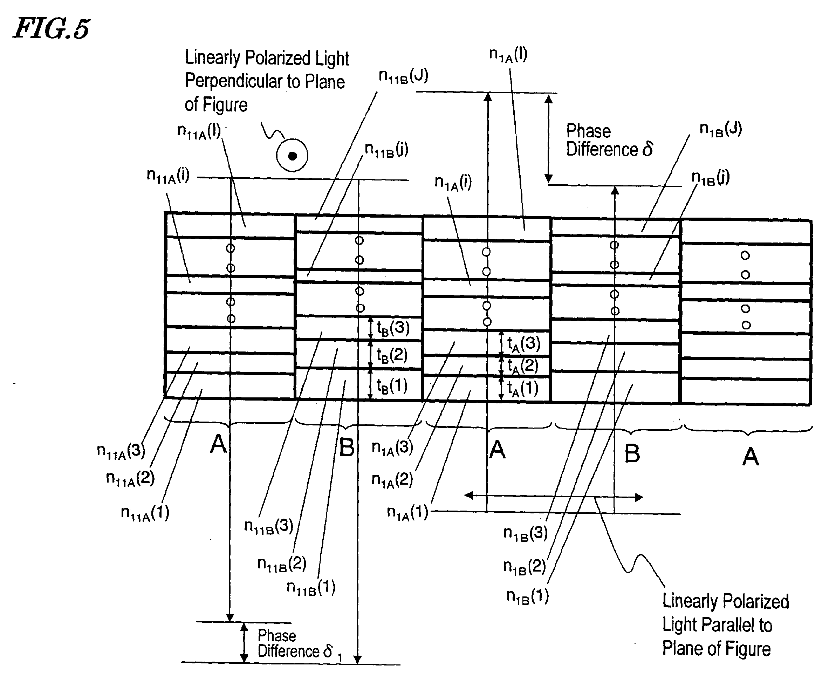

Next, with reference to FIG. **5,** the structure of an optical diffraction element to be suitably employed for the optical pickup of the present embodiment will be described. FIG. **5** is a cross-sectional view schematically showing the periodic structure of such an optical diffraction element.

The optical diffraction element shown in FIG. 5 has a periodic structure in which regions **A** and regions B are alternately arranged along an in-plane direction. This periodic structure constitutes a grating pattern for diffracting light. Each of regions **A** and regions B is structured so that a plurality of medium layers having different refractive indices and/or thicknesses are stacked. When light is transmitted through the diffraction element of FIG. **5,** a phase difference occurs between the light transmitted through the regions **A** and the light transmitted through the regions **B,** thus resulting in a diffraction phenomenon.

A phase difference which occurs between the regions **A** and regions B when linearly polarized light whose polarization direction is parallel to the plane of FIG. 5 is transmitted through the diffraction grating of FIG. **5** is denoted as δ. On the other hand, a phase difference which occurs between the regions **A** and regions **B** when linearly polarized light whose polarization direction is perpendicular to the plane of FIG. 5 is transmitted through the diffraction grating of FIG. 5 is denoted as $\delta_1$. Furthermore, with respect to light of the wavelength $\lambda_1$ which is linearly polarized light whose polarization direction is parallel to the plane of the figure, an $i^{th}$ layer ( i=1, 2, 3,... I) of each region **A** has a refractive index of $n_{1A}(i)$ and a thickness of $t_A(i)$, whereas a $j^{th}$ layer (j=1, 2, 3,... J) of each region B has a refractive index of $n_{1B}(j)$ and a thickness of $t_B(j)$. On the other hand, with respect to linearly polarized light whose polarization direction is perpendicular to the plane of the figure, an $i^{th}$ layer (i=1, 2, 3,... I) of each region **A** has a refractive index of $n_{11A}(i)$, and a $j^{th}$ layer (j=1, 2, 3,... J) of each region B has a refractive index of $n_{11B}(j)$ . Note that a "medium layer", as used in the present specification, also encompasses a layer of air.

Under the above denotations, eq. 11 below holds true.

$$\text{(eq. 11)}$$

$$St_A(i)=St_B(j)$$

Then, the phase difference δ is expressed by eq. 12 below.

$$\text{(eq. 12)}$$

$$\delta = S(n_{1A}(i) \times t_A(i)) - S(n_{1B}(j) \times t_B(j))$$

Herein, S means a total of the product of the refractive index and the layer thickness of each layer.

On the other hand, the phase difference $\delta_1$ is expressed by eq. 13 below.

$$\text{(eq. 13)}$$

$$\delta_1 = S(n_{11A}(i) \times t_A(i)) - S(n_{11B}(j) \times t_B(j))$$

From (eq. 2) and (eq. 3), when the phase difference δ or the phase difference $\delta_1$ is equal to $L\lambda_1$ (where L is an integer other than 0), a state of "perfect transmission", where there is no diffraction, occurs. When the phase difference δ or the phase difference $\delta_1$ is equal to $(2M+1)\lambda_1/2$, a state of "perfect diffraction" occurs. In other words, if the periodic structure of the optical diffraction element satisfies both eq. 14 and eq. 15 below, "perfect transmission" is realized when light of the wavelength $\lambda_1$ enters the optical diffraction element from the light source side, and "perfect diffraction" is realized when light of the wavelength $\lambda_1$ enters from the disk side.

$$\text{(eq. 14)}$$

$$S(n_{1A}(i) \times t_A(i)) - S(n_{1B}(j) \times t_B(j)) = L\lambda_1$$

(where L is an integer other than 0)

$$\text{(eq. 15)}$$

$$S(n_{11A}(i) \times t_A(i)) - S(n_{11B}(j) \times t_B(j)) = (2M+1)\lambda_1/2$$

(where M is an integer)

On the other hand, when the above conditions are satisfied, a phase difference of $(2M+1)\pi\lambda_1/\lambda_2$ exists between the phase difference $\delta$ and the phase difference $\delta_1$ with respect to light of the wavelength $\lambda_2$, and therefore $1^{st}$ order diffracted light as expressed by (eq. 16) below occurs.

$$(eq. \ 16)$$

$$(2/\pi)^2 \times \cos^2((2M+1)(\pi\lambda_1/\lambda_2)/2)$$

The diffracted light is non-zero unless there exists a difference between light of the wavelength $\lambda_1$ and light of the wavelength $\lambda_2$ such that one is an integer multiple (twice or more) of the other wavelength. Since there is not such a large difference between the wavelength ($\lambda_1$=650 nm) of light for DVDs and the wavelength ($\lambda_2$=800 nm) of light for CDs, the diffracted light is non-zero.

Even in the case where the light from the light source side is linearly polarized light which is perpendicular to the plane of the figure and the light from the disk side is linearly polarized light which is parallel to the plane of the figure, each medium layer exerts the same action as above on light. Therefore, a condition where eq. 17 and eq. 18 below are satisfied may be adopted.

$$(eq. \ 17)$$

$$S(n_{1A}(i) \times t_A(i)) - S(n_{1B}(j) \times t_B(j)) = (2M+1)\lambda_1/2$$

(where M is an integer)

$$(eq. \ 18)$$

$$S(n_{11A}(i) \times t_A(i)) - S(n_{11B}(j) \times t_B(j)) = L\lambda_1$$

(where L is an integer other than 0)

(Embodiment 2)

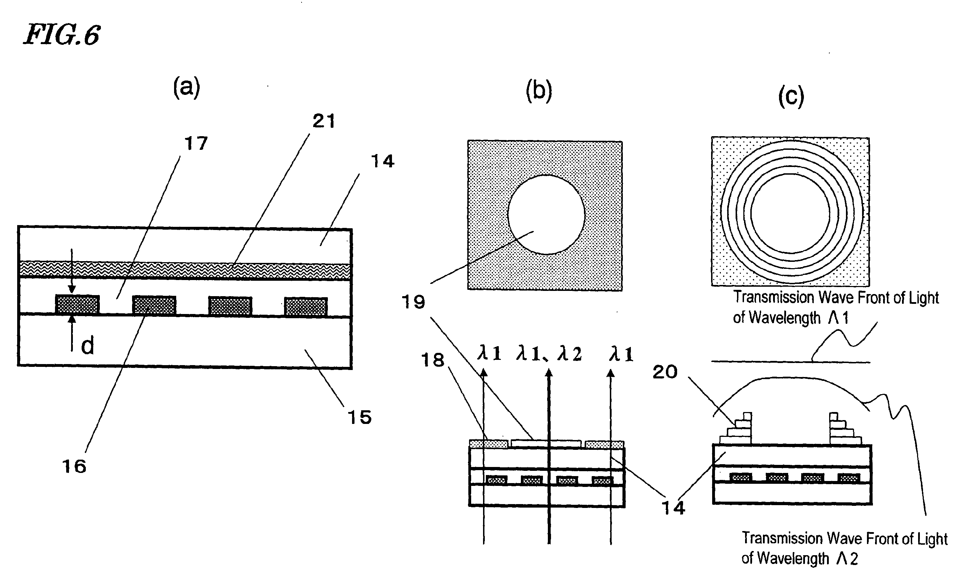

With reference to FIGS. **6(a)** to **(c),** a second embodiment of the optical diffraction element of the present invention will be described.

FIG. **6(a)** is a cross-sectional view showing the structure of a polarization element incorporating the optical diffraction element of the present embodiment and a wavelength plate.

The polarization element comprises a first glass substrate **15,** a thin film periodic structure **16** formed on the glass substrate **15,** an isotropic medium **17** formed on the glass substrate **15** so as to cover the thin film periodic structure **16,** a wavelength plate **21** formed on the isotropic medium **17,** and a second glass substrate **14** formed on the wavelength plate **21.** Herein, the thin film periodic structure **16** has refractive index anisotropy, and the wavelength plate 21 is formed of a film-like sheet.

A diffraction grating portion of the polarization element above is produced as follows, for example.

First, on the glass substrate **15,** a grating pattern of a thin film having refractive index anisotropy (refractive index $n_1$, $n_2$), composed of an organic film having a thickness d, is formed. Next, grooves in the thin film periodic structure **16** are filled with a medium 17(refractive index $n_3$) having isotropic refractive index.

In this case, for reasons similar to those described with respect to Embodiment 1, the thickness d, the refractive indices $n_1$, $n_2$, and $n_3$, and the wavelength $\lambda_1$ of light are selected so as to satisfy either eq. 19 and eq. 20, or eq. 21 and eq. 22 below.

$$(eq. \ 19)$$

$$d(n_3-n_1)=L\lambda_1$$

(where L is an integer other than 0)

$$(eq. \ 20)$$

$$d(n_3-n_2)=(2M+1)\lambda_1/2$$

(where M is an integer)

$$(eq. \ 21)$$

$$d(n_3-n_1)=(2M+1)\lambda_1/2$$

(where M is an integer)

$$(eq. \ 22)$$

$$d(n_3-n_2)=L\lambda_1$$

(where L is an integer other than 0)

In accordance with the structure of the present embodiment, fabrication of the element is facilitated, and the construction including the wavelength plate is simplified. Therefore, the structure of the present embodiment is suitable for downsizing of an optical pickup.

Furthermore, as shown in FIG. **6(b)** and FIG. **6(c),** by providing thin films or structures having other functions on the glass substrate, such other functions can also be added to the functions of the polarization element.

The element shown in FIG. **6(b)** further comprises an aperture restricting film **18** and a phase correction film **19** formed on the glass substrate **14.** The aperture restricting film **18** is formed of a material having such a wavelength selectivity that it transmits light of the wavelength $\lambda_2$ but blocks light of the wavelength $\lambda_1$, for example. Therefore, the aperture restricting film **18** functions as a selective "diaphragm" for light of the wavelength $\lambda_1$. The phase correction film **19** corrects a phase shift occurring between the region in which the aperture restricting film **18** exists and the region in which the aperture restricting film **18** does not exist.

In the case where data recording/reproduction is to be performed for a plurality of optical disks of different recording densities, e.g., DVDs and CDs, the size (diameter) of the light spot which is formed on the optical disk differs depending on the recording density. In accordance with the element of FIG. **6(b),** a film having wavelength selectivity is used, so that the numerical aperture NA can be adjusted in accordance with the wavelength of the incident light, and a light spot of an appropriate size can be formed on the optical disk.

The element shown in FIG. **6(c)** comprises a phase step structure 20 whose thickness varies in the manner of concentric circles. Each step in the phase step structure 20 of the present embodiment has an optical thickness equal to an integer multiple of the wavelength $\lambda_1$, and therefore light of the wavelength $\lambda_1$ can be transmitted through the element with its wave fronts being aligned (equivalent to plane waves). On the other hand, if light of the wavelength $\lambda_2$ is transmitted through the element of FIG. **6(c),** its phase changes in the manner of concentric circles. In other words, wave fronts whose phases are gradually shifted from the center of the optical axis toward the outside, i.e., substantially spherical waves, are formed. If such spherical waves were converged by a converging lens onto the recording surface of an optical disk having the same base material thickness as in the case of light of the wavelength $\lambda_1$, a blurred image would be formed due to spherical aberration. However, light of the wavelength $\lambda_2$ is originally applicable to a disk of a different base material thickness from that of an optical disk which is to be irradiated with light of the wavelength $\lambda_1$. By optimally designing the phase step structure 20, it is possible to correct aberration occurring due to a difference in base material thickness.

In the case where an infinite system is adopted such that a light source of the wavelength $\lambda_1$ and a light source of the wavelength $\lambda_2$ have their emission points at substantially the same position, and either light is collimated by a collimating lens, optimum convergence can be realized, even by using the same lens, for recording surfaces of disks of different base material thicknesses, with spherical aberration being suppressed.

It is also possible to construct a multi-functional polarization element by forming the aperture restricting film **18** and the phase step plate 20 respectively on the glass substrate **15** and the glass substrate **14.**

(Embodiment 3)

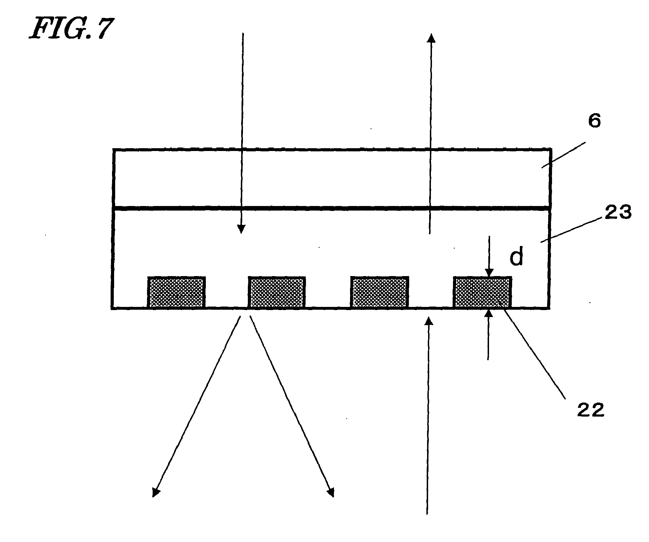

With reference to FIG. 7, another polarization element structure comprising the optical diffraction element of the present invention and a wavelength plate will be described.

The optical diffraction element of the present embodiment has a substrate **23** on which regions **22** of refractive index anisotropy are periodically formed. The substrate **23** is formed of an anisotropic material such as lithium niobate, and the regions **22** of refractive index anisotropy are regions whose polarity is inverted by a method such as proton exchange (thickness: d, proton exchanged portions).

The periodic structure on the substrate **23** is composed of portions having refractive indices no and $n_1$ respectively for ordinary light and extraordinary light of the wavelength $\lambda_1$, and portions having refractive index $n_{01}$ and $n_{11}$ respectively for ordinary light and extraordinary light of the wavelength $\lambda_1$.

These values are set so as to satisfy either eq. 23 and eq. 24, or eq. 25 and eq. 26 below.

$$(\mathrm{eq.\ 23})$$

$$d(n_0 - n_{01}) = L\lambda_1$$

(where L is an integer other than 0)

$$(\mathrm{eq.\ 24})$$

$$d(n_1 - n_{11}) = (2M+1)\lambda_1/2$$

(where M is an integer)

$$(\mathrm{eq.\ 25})$$

$$d(n_0 - n_{01}) = (2M+1)\lambda_1/2$$

(where M is an integer)

$$(\mathrm{eq.\ 26})$$

$$d(n_1 - n_{11}) = L\lambda_1$$

(where L is an integer other than 0)

According to the present embodiment, there is provided an advantage in that the fabrication of the element is simplified.

(Embodiment 4)

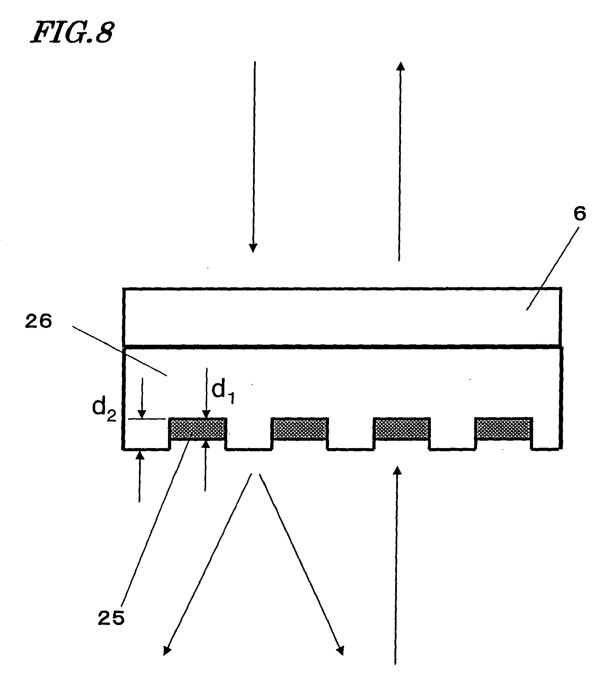

With reference to FIG. 8, another polarization element structure comprising the optical diffraction element of the present invention and a wavelength plate will be described.

In each of the earlier-described embodiments, there is an advantage in that the fabrication of the polarization element is easy, but the refractive indices of the selectable materials are in a relatively narrow range. Therefore, depending on the wavelength of the light to be used, there may be no solution that satisfies the above equations.

An optical diffraction element of FIG. 8 includes a substrate **26** on which regions **25** of refractive index anisotropy are periodically formed. The substrate **26** is formed of an anisotropic material such as lithium niobate, and the regions **25** of refractive index anisotropy are regions whose polarity is inverted by a method such as proton exchange (thickness: $d_1$, proton exchanged portions). Such a structure can be produced by, after forming the proton exchanged portions **25** of the thickness $d_2$ on the substrate **26**, selectively etching only the proton exchanged portions **25**, and setting their thickness to $d_1$.

Now, it is assumed that the proton exchanged portions 25 have refractive indices no and $n_1$ with respect to ordinary light and extraordinary light of the wavelength $\lambda_1$ and have the thickness $d_1$, and that the substrate **26** has refractive indices $n_{01}$ and $n_{11}$ with respect to ordinary light and extraordinary light of the wavelength $\lambda_1$.

The respective values are set so as to satisfy either eq. 27 and eq. 28, or eq. 29 and eq. 30 below.

$$(\text{eq. 27})$$

$$d_2(n_{01}-1)-d_1(n_0-1)=L\lambda_1$$

(where L is an integer other than

$$(\text{eq. 28})$$

$$d_2(n_{11}-1)-d_1(n_1-1)=(2M+1)\lambda_1/2$$

(where M is an integer)

$$(\text{eq. 29})$$

$$d_2(n_{01}-1)-d_1(n_0-1)=(2M+1)\lambda_1/2$$

(where M is an integer)

$$(\text{eq. 30})$$

$$d_2(n_{11}-1)-d_1(n_1-1)=L\lambda_1$$

(where L is an integer other than 0)

According to the present embodiment, by adjusting the etching amount of the proton exchanged portion **25**, the thickness $d_2$ and the thickness $d_1$ can be set to independent values, thus broadening the range of selection of materials having refractive indices satisfying the above equations.

(Embodiment 5)

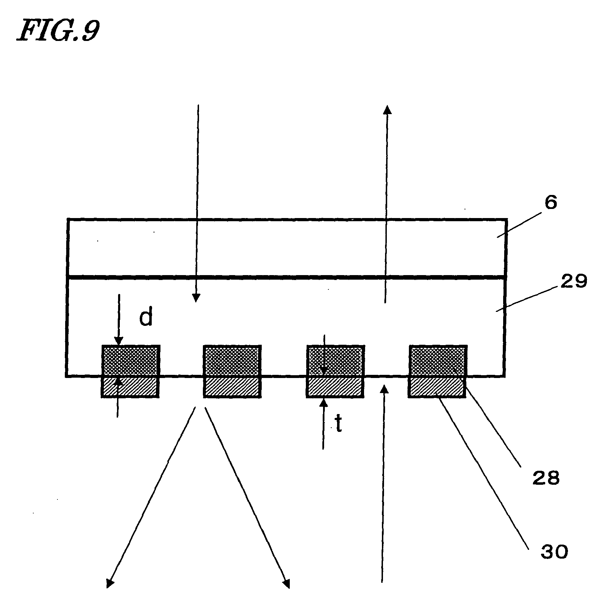

With reference to FIG. **9**, another embodiment of the optical diffraction element of the present invention will be described.

In accordance with the optical diffraction element of Embodiment 4, while it is easy to find a material satisfying the necessary conditions, the etching amount for the substrate cannot be made so large. The reason is that, if the etching amount were made large, etching would progress not only in the depth direction but also in the lateral direction (side etching). If side etching occurs, a taper will be formed on the sides of the grating grooves, such that the cross-sectional shapes of the grooves are no longer ideally rectangular.

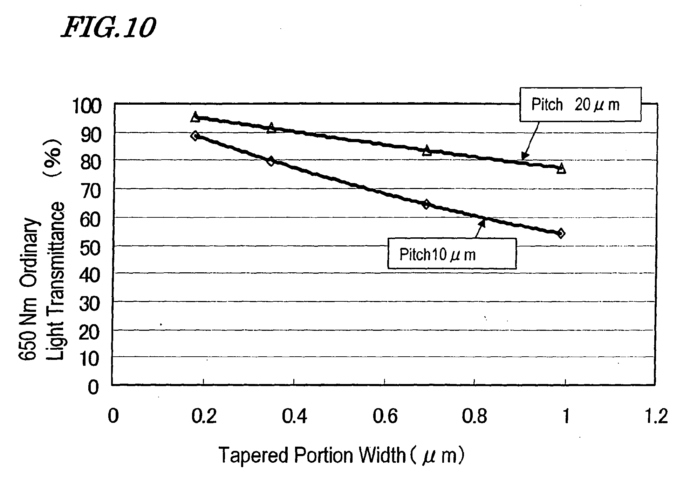

FIG. **10** is a graph, in the case of producing optical diffraction elements each having a periodic structure with a grating pitch of 10 $\mu$m or 20 $\mu$m, showing the relationship between the width of tapered portions associated with side etching and the 0th transmission efficiency for light of the wavelength $\lambda_1$. As can be seen from this graph, the greater the tapered portion width is, i.e., the farther the side etching progresses, the transmission efficiency is decreased, resulting in greater losses.

On the other hand, in accordance with an optical diffraction element having the structure as shown in FIG. 9, instead of etching portions **28** of refractive index anisotropy (formed through proton exchange or the like) into a substrate **29** having refractive index anisotropy, a high-refractive index thin film (refractive index $n_4$, thickness t) 30, such as tantalum, is grown thereupon. Patterning of the high-refractive index thin film **30** may be performed by, for example, lift-off technique. The reason for employing a high-refractive index thin film is that, the greater the refractive index $n_4$ is, the smaller the required thickness t of the thin film **30** can be made.

By adopting such a structure, tapers due to side etching are not formed, and the refractive index and thickness of the high-refractive index film 30 can be adjusted, so that it is easy to produce a periodic structure satisfying the conditions defined by the aforementioned equations.

In the present embodiment, regions of refractive index anisotropy are composed of: regions G having refractive indices no and $n_1$ with respect to ordinary light and extraordinary light, respectively, of the wavelength $\lambda_1$; and regions H having refractive indices $n_{01}$ and $n_{11}$ with respect to ordinary light and extraordinary light, respectively, of the wavelength $\lambda_1$.

In this case, if the film 30 is present on the regions G, then d, t, $n_0$, $n_1$ , $n_{01}$, $n_{11}$ , and $n_4$ are set so as to satisfy either eq. 31 and eq. 32, or eq. 33 and eq. 34.

$$(\text{eq. 31})$$

$$d(n_{01}-n_0)-t(n_4-1)=L\lambda_1$$

(where L is an integer other than 0)

$$(\text{eq. 32})$$

$$d(n_{11}-n_1)-t(n_4-1)=(2M+1)\lambda_1/2$$

(where M is an integer)

$$(\text{eq. 33})$$

$$d(n_{01}-n_0)-t(n_4-1)=(2M+1)\lambda_1/2$$

(where M is an integer)

$$(\text{eq. 34})$$

$$d(n_{11}-n_1)-t(n_4-1)=L\lambda_1$$

(where L is an integer other than 0)

If the film **30** is present on the regions H, then d, t, no, $n_1$, $n_{01}$, $n_{11}$, and $n_4$ are set so as to satisfy either eq. 35 and eq. 36, or eq. 37 and eq. 38.

$$\mathtt{(eq.\ 35)}$$

$$d(n_{01}-n_0)-t(1-n_4)=L\lambda_1$$

(where L is an integer other than 0)

$$\mathtt{(eq.\ 36)}$$

$$d(n_{11}-n_1)-t(1-n_4)=(2M+1)\lambda_1/2$$

(where M is an integer)

$$\mathtt{(eq.\ 37)}$$

$$d(n_{01}-n_0)-t(1-n_4)=(2M+1)\lambda_1/2$$

(where M is an integer)

$$\mathtt{(eq.\ 38)}$$

$$d(n_{11}-n_1)-t(1-n_4)=L\lambda_1$$

(where L is an integer other than 0)

In order to prevent a decrease in the diffraction efficiency due to side etching, after forming diffraction grooves on the surface of a substrate having refractive index anisotropy, the inside of the grooves may be embedded with an anisotropic material having an appropriate thickness. In order to form rectangular diffraction grooves on a substrate having refractive index anisotropy, it is preferable to use physical etching which causes little side etching, e.g., ion milling.

In the embodiments described above, light of different wavelengths enters an optical diffraction element with the same polarization direction. Alternatively, such light of different wavelengths may be polarized in directions perpendicular to each other. In this case, a polarizer plate which functions as a 1/2 wavelength plate with respect to light of a specific wavelength may be disposed between the light source and the optical diffraction element.

According to the present invention, a light splitting element which, by means of a single optical diffraction element, splits light from an optical disk with respect to light of different wavelengths and guides the light to a detector can be realized. Therefore, the optical system of an optical pickup can be simplified, and recording/reproduction for optical disks of different base material thicknesses and recording densities can be realized by using a single small-sized and inexpensive optical pickup.

In the case where recording/reproduction is to be performed for a disk whose base material is thick and which has a high birefringence, e.g., a CD, changes in the amount of detected light are small because of low polarization dependence, and the signal will not be lost even in the worst cases.

## INDUSTRIAL APPLICABILITY

According to the present invention, it is possible to cause necessary diffraction for both a light beam for CDs and a light beam for DVDs with a single optical diffraction element, thus making it easy to reduce the size of an optical information processing device.

**Claims**

1. An optical diffraction element to be disposed in an optical path through which a plurality of light beams of different wavelengths travel, comprising:

   a periodic structure which, when a first light beam having a wavelength $\lambda_1$ among the plurality of light beams is in a linear polarization state polarized in a first direction X, allows the first light beam to be substantially completely transmitted therethrough, but when the first light beam is in a linear polarization state polarized in a second direction Y perpendicular to the first direction, causes the first light beam to be substantially completely diffracted,
   wherein the optical diffraction element diffracts at least a portion of a second light beam having a wavelength $\lambda_2$ among the plurality of light beams, the wavelength $\lambda_2$ being different from the wavelength $\lambda_1$ of the first light beam, regardless of a polarization state thereof.

2. The optical diffraction element according to claim 1, wherein the periodic structure
   converts the first light beam to light having a periodic phase difference of about $2n\pi$ (where n is an integer other than 0) when the first light beam is linearly polarized light polarized in the first direction X, and converts the first light beam to light having a periodic phase difference of about $(2m+1)\pi$ (where m is an integer) when the first light beam is linearly polarized light polarized in the second direction Y, and,
   converts the second light beam to light having a periodic phase difference of about $2n\pi\lambda_1/\lambda_2$ when the second light beam is linearly polarized light polarized in a direction substantially equal to the first direction X, and converts the second light beam to light having a phase difference of about $(2m+1)\pi\lambda_1/\lambda_2$ when the second light beam is linearly polarized light polarized in a direction substantially equal to the second direction Y.

3. The optical diffraction element according to claim 1, wherein, given a periodic refractive index difference $\Delta n_1$ when the wavelength of the linearly polarized light polarized in the first direction X is $\lambda_1$ and a refractive index difference $\Delta n_2$ when the wavelength is $\lambda_2$, and given a periodic refractive index difference $\Delta n_{11}$ when the wavelength of the linearly polarized light polarized in the second direction Y is $\lambda_1$ and a refractive index difference $\Delta n_{22}$ when the wavelength is $\lambda_2$,
   the periodic structure
   converts the first light beam to light having a periodic phase difference of about $2N\pi$ (where N is an integer other than 0) when the first light beam is linearly polarized light polarized in the first direction X, and converts the first light beam to light having a periodic phase difference of about $(2M+1)\pi$ (where M is an integer) when the first light beam is linearly polarized light polarized in the second direction Y, and,
   converts the second light beam to light having a periodic phase difference of a phase difference of about $2N\pi$ $\Delta n_2\lambda_1/(\Delta n_1\lambda_2)$ when the second light beam is linearly polarized light polarized in a direction substantially equal to the first direction X, and converts the second light beam to light having a phase difference of about $(2M+1)\pi\Delta n_{22}$ $\lambda_1/(\Delta n_{11}\lambda_2)$ when the second light beam is linearly polarized light polarized in a direction substantially equal to the second direction Y.

4. The optical diffraction element according to claim 2 or 3, wherein,
   the periodic structure has first regions A and second regions B arranged alternately and periodically;
   each first region and each second region have at least one layer; and
   with respect to linearly polarized light of the wavelength $\lambda_1$ having a polarization direction in the direction X, an $i^{th}$ layer (i=1, 2, 3,... I) (where I is a total number of layers in each A region including any layer of air) of each region A has a refractive index $n_{1A}(i)$ and a thickness $t_A(i)$, and a $j^{th}$ layer (j=1, 2, 3,... J) (where J is a total number of layers in each B region including any layer of air) of each region B has a refractive index $n_{1B}(j)$ and a thickness $t_B(j)$, and with respect to linearly polarized light of the wavelength $\lambda_1$ having a polarization direction in the direction Y perpendicular to the direction X, an $i^{th}$ layer (i=1, 2, 3,... I) of each region A has a refractive index $n_{11a}(i)$ and a $j^{th}$ layer (j=1, 2, 3,... J) of each region B has a refractive index $n_{11B}(j)$, where,

$$St_A(i)=St_B(j)$$

   holds true; and

$$S(n_{1A}(i) \times t_A(i)) - S(n_{1B}(j) \times t_B(j)) = L\lambda_1$$

(where L is an integer other than 0)
and

$$S(n_{11A}(i) \times t_A(i)) - S(n_{11B}(j) \times t_B(j)) = (2M+1)\lambda_1/2$$

(where M is an integer),
or, alternatively,

$$S(n_{1A}(i) \times t_A(i)) - S(n_{1B}(j) \times t_B(j)) = (2M+1)\lambda_1/2$$

(where M is an integer) and

$$S(n_{11A}(i) \times t_A(i)) - S(n_{11B}(j) \times t_B(j)) = L\lambda_1$$

(where L is an integer other than 0)
are satisfied.

5. The optical diffraction element according to claim 2 or 3, wherein,
the periodic structure has, within a layer of a thickness d, regions of refractive index anisotropy and regions of refractive index isotropy arranged alternately and periodically; and
the regions of refractive index anisotropy have refractive indices of no and $n_1$ with respect to ordinary light and extraordinary light, respectively, of the wavelength $\lambda_1$, and the regions of refractive index isotropy have a refractive index of $n_3$ with respect to light of the wavelength $\lambda_1$, where d, $n_1$, $n_2$, $n_3$, and $\lambda_1$ satisfy:

$$d(n_3 - n_1) = L\lambda_1$$

(where L is an integer other than 0) and

$$d(n_3 - n_2) = (2M+1)\lambda_1/2$$

(where M is an integer),
or, alternatively,

$$d(n_3 - n_1) = (2M+1)\lambda_1/2$$

(where M is an integer)
and

$$d(n_3 - n_2) = L\lambda_1$$

(where L is an integer other than 0).

6. The optical diffraction element according to claim 2 or 3, wherein,
the periodic structure has, within a layer of a thickness d, first and second regions of refractive index anisotropy arranged alternately and periodically; and

the first regions of refractive index anisotropy have refractive indices $n_0$ and $n_1$ with respect to ordinary light and extraordinary light, respectively, of the wavelength $\lambda_1$, and the second regions of refractive index anisotropy have refractive indices $n_{01}$ and $n_{11}$ with respect to the ordinary light and the extraordinary light, respectively, where, d, no, $n_1$, $n_{01}$, and $n_{11}$ satisfy:

$$d(n_0-n_{01})=L\lambda_1$$

(where L is an integer other than 0)
and

$$d(n_1-n_{11})=(2M+1)\lambda_1/2$$

(where M is an integer),
or, alternatively,

$$d(n_0-n_{01})=(2M+1)\lambda_1/2$$

(where M is an integer)
and

$$d(n_1-n_{11})=L\lambda_1$$

(where L is an integer other than 0).

7.  The optical diffraction element according to claim 2 or 3, wherein,
    the periodic structure has first regions of refractive index anisotropy having a thickness $d_1$ and second regions of refractive index anisotropy having a thickness $d_2$ arranged alternately and periodically; and
    the first regions of refractive index anisotropy have refractive indices no and $n_1$ with respect to ordinary light and extraordinary light, respectively, of the wavelength $\lambda_1$, and the second regions of refractive index anisotropy have refractive indices $n_{01}$ and $n_{11}$ with respect to the ordinary light and the extraordinary light, respectively, where,

$$d_2(n_{01}-1)-d_1(n_0-1)=L\lambda_1$$

(where L is an integer other than 0)
and

$$d_2(n_{11}-1)-d_1(n_1-1)=(2M+1)\lambda_1/2$$

(where M is an integer),
or, alternatively,

$$d_2(n_{01}-1)-d_1(n_0-1)=(2M+1)\lambda_1/2$$

(where M is an integer)
and

$$d_2(n_{11}-1)-d_1(n_1-1)=L\lambda_1$$

(where L is an integer other than 0)
are satisfied.

8. The optical diffraction element according to claim 2 or 3, wherein, the periodic structure has
first and second regions of refractive index anisotropy arranged alternately and periodically within a layer of a thickness d, and a film $F_1$ formed on the first or second regions of refractive index anisotropy, the film $F_1$ having a refractive index $n_4$ and a thickness t; and
the first regions of refractive index anisotropy have refractive indices no and $n_1$ with respect to ordinary light and extraordinary light, respectively, of the wavelength $\lambda_1$, and the second regions of refractive index anisotropy have refractive indices $n_{01}$ and $n_{11}$ with respect to the ordinary light and the extraordinary light, respectively, where, when the film $F_1$ exists on the first regions of refractive index anisotropy,

$$d(n_{01}-n_0)-t(n_4-1)=L\lambda_1$$

(where L is an integer other than 0)
and

$$d(n_{11}-n_1)-t(n_4-1)=(2M+1)\lambda_1/2$$

(where M is an integer), or, alternatively,

$$d(n_{01}-n_0)-t(n_4-1)=(2M+1)\lambda_1/2$$

(where M is an integer)
and

$$d(n_{11}-n_1)-t(n_4-1)=L\lambda_1$$

(where L is an integer other than 0)
are satisfied, and
when the film $F_1$ exists on the second regions of refractive index anisotropy,

$$d(n_{01}-n_0)-t(1-n_4)=L\lambda_1$$

(where L is an integer other than 0)
and

$$d(n_{11}-n_1)-t(1-n_4)=(2M+1)\lambda_1/2$$

(where M is an integer),
or, alternatively,

$$d(n_{01}-n_0)-t(1-n_4)=(2M+1)\lambda_1/2$$

(where M is an integer) and

$$d(n_{11}-n_1)-t(1-n_4)=L\lambda_1$$

(where L is an integer other than 0)
are satisfied.

9. The optical diffraction element according to claim 1, wherein polarization directions of at least two of the plurality of light beams are substantially perpendicular to each other.

10. The optical diffraction element according to claim 1, comprising aperture restricting means for varying an aperture area for allowing a light beam to be transmitted therethrough in accordance with a wavelength of the light beam.

11. The optical diffraction element according to claim 1 having a stepped structure of concentric circles, including steps each being equal to an integer multiple of a wavelength of at least one light beam among the plurality of light beams having different wavelengths.

12. An optical information processing device capable of writing data to an optical information medium of a plurality of types and/or reading data from the optical information medium, comprising:

a light source for forming a plurality of light beams of different wavelengths;
an objective lens for converging the light beams to form a light spot on a signal surface of the optical information medium;
an optical diffraction element and a wavelength plate disposed between the light source and the objective lens; and
a photodetector for detecting an intensity of the light beams reflected from the optical information medium, wherein,
with respect to at least two light beams among the plurality of light beams, the optical diffraction element is disposed in a portion common to an optical path from the light source to the objective lens and an optical path reflecting from the signal surface of the optical information medium to the photodetector;
among the at least two light beams, the optical diffraction element periodically causes a phase difference of about $2n\pi$ (where n is an integer other than 0) in a first light beam having a wavelength $\lambda_1$, and periodically causes a phase difference of about $2n\pi\lambda_1/\lambda_2$ in a second light beam having a wavelength $\lambda_2$;
the first light beam having been transmitted through the optical diffraction element is converged on the signal surface of a first optical information medium via the objective lens, and the first light beam reflected from the signal surface enters the optical diffraction element via the objective lens, thus being periodically imparted with a phase difference of about $2n\pi+\alpha$ (where $\alpha$ is a real number other than 0) by the optical diffraction element; and
the second light beam having been transmitted through the optical diffraction element is converged on the signal surface of a second optical information medium via the objective lens, and the second light beam reflected from the signal surface enters the optical diffraction element via the objective lens, thus being periodically imparted with a phase difference of about $(2n\pi+\alpha)\lambda_1/\lambda_2$ by the optical diffraction element.

13. The optical information processing device according to claim 12, wherein $\alpha$ associated with the first light beam is $(2m+1)\pi$ (where m is an integer).

14. An optical information processing device capable of writing data to an optical information medium of a plurality of types and/or reading data from the optical information medium, comprising:

a light source for forming a plurality of light beams of different wavelengths;
an objective lens for converging the light beams to form a light spot on a signal surface of the optical information medium;
an optical diffraction element and a wavelength plate disposed in a portion common to an optical path from the light source to the objective lens and an optical path reflecting from the optical information medium to the photodetector; and

a photodetector for detecting an intensity of the light beams reflected from the optical information medium, wherein,

the optical diffraction element comprises the optical diffraction element according to claim 1.

**15.** The optical information processing device according to claim 14, comprising means for moving the objective lens, wherein the optical diffraction element is mounted on the means for moving the objective lens.

**16.** The optical information processing device according to claim 14, wherein the wavelength plate has a retardation of about $(2M+1) \lambda_1/4$ (where M is an integer) with respect to a light beam having a wavelength $\lambda_1$ among the plurality of light beams, and has a retardation of about $N\lambda_2$ (where N is an integer) with respect to a light beam having a wavelength $\lambda_2$ .

**17.** The optical information processing device according to claim 14, wherein the wavelength plate has a retardation of about $(2M+1) \lambda_1/4$ (where M is an integer) with respect to a light beam having a wavelength $\lambda_1$ among the plurality of light beams, and has a retardation of $(2N+1) \lambda_2/2$ (where N is an integer) with respect to a light beam of a wavelength $\lambda_2$.

**18.** The optical information processing device according to claim 14, wherein the at least two light beams are polarized in perpendicular directions to each other when entering the optical diffraction element after being emitted from the light source.

**19.** An electronic appliance comprising:

the optical information processing device according to claim 14; and
a driving section for rotating recording media produced according to a plurality of different standards.

FIG.1

(a)    (b)

EP 1 622 137 A1

*FIG.2*

EP 1 622 137 A1

FIG.3

(a)

(b)

Disk Side

Light Source Side

$\lambda_1$

$\lambda_2$

6

5

7

11

EP 1 622 137 A1

FIG.4

(a)

(b)

(c)

Border Line

5

1

3a  3b
12a 12b
13a 13b
+1

3d
12d
13d
12c
3c
13c
+1
X

3b
3a
1
3d
3c

*FIG.5*

EP 1 622 137 A1

# FIG.6

(a)

(b)

(c)

Transmission Wave Front of Light of Wavelength $\lambda 1$

Transmission Wave Front of Light of Wavelength $\lambda 2$

*FIG.7*

6

23

d

22

*FIG.8*

6

26

d₂  d₁

25

*FIG.9*

6

29

d

t

28

30

*FIG.10*

*FIG.11*

EP 1 622 137 A1

*FIG.12*

<div align="center">

**INTERNATIONAL SEARCH REPORT**

</div>

| International application No. |
| --- |
| PCT/JP2004/005822 |

| A. CLASSIFICATION OF SUBJECT MATTER |
| --- |
| Int.Cl⁷ G11B7/135, G02B5/18, 5/30 |

According to International Patent Classification (IPC) or to both national classification and IPC

| B. FIELDS SEARCHED |
| --- |
| Minimum documentation searched (classification system followed by classification symbols) |
| Int.Cl⁷ G11B7/09, 7/095, 7/135, G02B5/18, 5/30 |

| Documentation searched other than minimum documentation to the extent that such documents are included in the fields searched |
| --- |
| Jitsuyo Shinan Koho      1922–1996    Toroku Jitsuyo Shinan Koho    1994–2004 |
| Kokai Jitsuyo Shinan Koho   1971–2004    Jitsuyo Shinan Toroku Koho    1996–2004 |

| Electronic data base consulted during the international search (name of data base and, where practicable, search terms used) |
| --- |

### C. DOCUMENTS CONSIDERED TO BE RELEVANT

| Category* | Citation of document, with indication, where appropriate, of the relevant passages | Relevant to claim No. |
| --- | --- | --- |
| A | JP 10-40567 A (Hitachi, Ltd.), 13 February, 1998 (13.02.98), Full text; Figs. 1 to 12 (Family: none) | 1-19 |
| A | JP 2001-174614 A (Asahi Glass Co., Ltd.), 29 June, 2001 (29.06.01), Full text; Figs 1 to 6 (Family: none) | 1-19 |
| A | JP 2002-182034 A (Matsushita Electric Industrial Co., Ltd.), 26 June, 2002 (26.06.02), Full text; Figs. 1 to 5 & US 2002/114073 A1 | 1-19 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 August, 2004 (13.08.04) | 31 August, 2004 (31.08.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/005822 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Claims 1-11, 14-19 relate to a constituent feature using an optical diffraction device which has a periodical structure in which when the first light beam is linearly polarized along a first direction X, the first light beam is almost completely transmitted, and when the first light beam is linearly polarized along a second direction Y perpendicular to the first direction X, the first light beam is almost completely diffracted, and at least a part of the second beam having a different wavelength from that of the first beam is diffracted irrespective of its polarized state.
    Claims 12,13 relate to an optical information processing device using (Continued to extra sheet.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐   The additional search fees were accompanied by the applicant's protest.

                ☒   No protest accompanied the payment of additional search fees.

Form PCT/ISA/210 (continuation of first sheet (2)) (January 2004)

44

| INTERNATIONAL SEARCH REPORT | International application No. |
| :--- | :--- |
| | PCT/JP2004/005822 |

Continuation of Box No.III of continuation of first sheet(2)

an optical diffraction element which periodically imparts an approximately $2n\pi$ phase difference to a first light beam having a wavelength $\lambda_1$ and an approximately $2n\pi\lambda_1/\lambda_2$ phase difference to a second light beam having a wavelength $\lambda_2$.

Form PCT/ISA/210 (extra sheet) (January 2004)